# EUROPEAN PATENT SPECIFICATION

(11) **EP 2 650 571 B1**
(45) Date of publication and mention of the grant of the patent: **07.06.2017**
(21) Application number: 13162841.4
(22) Date of filing: 09.04.2013
(51) Int. Cl.: F16H 61/662

(54) **Belt-type continuously variable transmission having an abnormality determining device**
Stufenloses Umschlingungsgetriebe mit einer Anomaliebestimmungsvorrichtung
Transmission à variation continue de type à courroie avec dispositif de détermination d'anomalie

(30) Priority: 10.04.2012 JP 2012089475
(43) Date of publication of application: 16.10.2013
(73) Proprietor: Suzuki Motor Corporation, Shizuoka-ken 432-8611 (JP)
(72) Inventor: Muramatsu, Go, Shizuoka-Ken, 432-8611 (JP); Aoki, Yuta, Shizuoka-Ken, 432-8611 (JP)
(74) Representative: Klunker . Schmitt-Nilson . Hirsch

(56) References cited:
- WO-A1-03/027540
- JP-A- S62 002 059
- JP-A- S62 255 240
- JP-A- 2003 042 251
- US-A- 4 698 764

## Description

### BACKGROUND OF THE INVENTION

### Field of the Invention

The present invention relates to a belt-type continuously variable transmission having an abnormality determining device according to the preamble of each of claims 1, 3, 5 and 7. Such device is known for example from the following prior art:

### Description of the Related Art

A belt-type continuously variable transmission includes an endless V-belt and a pair of pulleys around which the V-belt is wrapped. One of the pulleys is a drive pulley connected to a crankshaft of an engine, and another of the pulleys is an idler pulley connected to a wheel. The belt-type continuously variable transmission continuously changes a transmission gear ratio by changing a belt contact diameter with the pulleys.

Each of the pulleys includes a pair of conical faces, and a drive mechanism. The pair of conical faces faces each other with a V-shaped groove being disposed therebetween. The drive mechanism causes the pair of faces to approach and separate from each other to change a width of the V-shaped groove. One of the faces is fixed to a rotary shaft of the pulley. Another one of the faces is movable in a rotation line direction of the rotary shaft. The belt contact diameter with the pulleys
is changed by decreasing or increasing the width of the V-shaped groove across which the pair of faces face each other.

The V-belt is wrapped around the V-shaped grooves of the pulleys.

The belt-type continuously variable transmission cannot transmit power at a time when the belt is damaged. A conventional belt damage detecting device can detect damage to the belt even during operation. The conventional belt damage detecting device detects whether or not the V-belt is damaged based on a relationship between a rotation speed ratio between an input shaft on the drive pulley side and an output shaft on the idler pulley side, and a driving force for causing the pair of faces to approach each other (e.g., see Patent Document 1 (Japanese Patent Laid-Open No. 2003-42251)).

Meanwhile, in the belt-type continuously variable transmission, the transmission gear ratio is changed based on a relationship between the width of the V-shaped groove and a belt width of the V-belt. Thus, if the width of the V-shaped groove is abnormally increased or decreased, or the V-belt is worn to have a smaller width, a relationship between the belt contact diameter and the transmission gear ratio is changed.

Since the width of the V-shaped groove is insufficiently decreased (the groove width remains large) or the V-belt is worn to have a smaller width, the transmission gear ratio at the same belt contact diameter is gradually reduced and the relationship between the belt contact diameter and the transmission gear ratio is generally changed. The reduction in the transmission gear ratio deteriorates fuel consumption or gas emissions since it becomes necessary to rotate the engine at higher speed so as to obtain a given vehicle speed.

Since the belt-type continuously variable transmission transmits power by friction between the V-belt and the pulleys, power transmission efficiency is reduced if oil or the like is attached thereto, thus changing a frictional coefficient between the V-belt and the pulleys.

However, the conventional belt damage detecting device detects damage to the V-belt (more specifically, a change in rigidity due to damage to a hoop), and cannot detect abnormality in the entire belt-type continuously variable transmission such as an abnormal increase or decrease in the V-shaped groove width, wear of the V-belt, and a change in the frictional coefficient between the V-belt and the pulleys. The conventional belt damage detecting device also needs to measure the driving force for causing the pair of faces to approach each other, and thus has disadvantages in the number of components, assembling efficiency, and costs.

JP S62 255240 A discloses a continuously variable transmission having a pulley the width thereof being variable by means of hydraulic pressure and by using values detected by various sensors. The transmission ratio is controlled properly.

In continuously variable transmission devices of the above prior art, it may be difficult to easily detect an abnormality occurring in an entire belt-type continuously variable transmission, such as abnormality in V-shaped groove width (widening or reducing), wear of the V-belt, change in frictional efficiency between the V-belt and the pulley or the like.

### SUMMARY OF THE INVENTION

The present invention was conceived in consideration of the circumstances mentioned above and an object thereof is to provide an
abnormality determining device for a belt-type continuously variable transmission which can determine abnormality in an entire belt-type continuously variable transmission with a simple structure.

The above and other objects can be achieved according to the present invention by providing, in one aspect, an abnormality determining device having the features of claim 1.

In this aspect, it may be preferred that the determining section determines the belt-type continuously variable transmission to be abnormal when the rotation speed of the engine is included in a predetermined abnormality determination range preliminarily set for each level of the opening degree of the throttle valve, and determines the belt-type continuously variable transmission to be normal when the rotation speed of the engine is not included in the abnormality determination range.

In another aspect of the present invention, there is provided an abnormality determining device for a belt-type continuously variable transmission having the features of claim 3.

In this aspect, it may be preferred that the determining section determines the belt-type continuously variable transmission to be abnormal when the rotation speed of the engine is included in a predetermined abnormality determination range preliminarily set for each level of the intake pressure, and determines the belt-type continuously variable transmission to be normal when the rotation speed of the engine is not included in the abnormality determination range.

In a further aspect of the present invention, there is also provided an abnormality determining device for a belt-type continuously variable transmission including the features of claim 5.

In this aspect, it may be preferred that the determining section determines the belt-type continuously variable transmission to be abnormal when the rotation speed of the engine is included in a predetermined abnormality determination range preliminarily set for each level of the opening degree of the throttle valve, and the rotation speed of the engine is included in a predetermined abnormality determination range preliminarily set for each level of the intake pressure, and determines the belt-type continuously variable transmission to be normal in other cases.

In a still further aspect of the present invention, there is also provided an abnormality determining device for a belt-type continuously variable transmission including the features of claim 7.

In this aspect, it may be preferred that the determining section determines the belt-type continuously variable transmission to be abnormal when the vehicle speed calculated by the comparison vehicle speed calculating section is included in a preliminarily-set predetermined abnormality determination range, and determines the belt-type continuously variable transmission to be normal when the vehicle speed calculated by the comparison vehicle speed calculating section is not included in the abnormality determination range.

In the above aspects, it may be further preferred to additionally include a warning section that issues a warning when the belt-type continuously variable transmission is continuously determined to be abnormal for a period longer than a preliminarily-set predetermined failure determination time period.

According to the an abnormality determining device for a belt-type continuously variable transmission of the various embodiments of the present invention of the structures mentioned above, it is possible to effectively determine abnormality in the entire belt-type continuously variable transmission with a simple structure. Moreover, the nature and further characteristic features and/or advantages will be made clearer from the following descriptions made with reference to the accompanying drawings.

### BRIEF DESCRIPTION OF THE DRAWINGS

Fig. 1 is a view of a system configuration illustrating an engine including an abnormality determining device for a belt-type continuously variable transmission according to a first embodiment of the present invention;
Fig. 2 is a flowchart representing abnormality determination control performed by the abnormality determining device for a belt-type continuously variable transmission according to the first embodiment of the present invention;
Fig. 3 is a conceptual view representing a graph of the abnormality determination control performed by the abnormality determining device for a belt-type continuously variable transmission according to the first embodiment of the present invention;
Fig. 4 is a view of a system configuration illustrating an engine including an abnormality determining device for a belt-type continuously variable transmission according to a second embodiment of the present invention;
Fig. 5 is a flowchart representing abnormality determination control performed by the abnormality determining device for a belt-type continuously variable transmission according to the second embodiment of the present invention;
Fig. 6 is a conceptual view representing a graph of the abnormality determination control performed by the abnormality determining device for a belt-type continuously variable transmission according to the second embodiment of the present invention;
Fig. 7 is a view of a system configuration illustrating an engine including an abnormality determining device for a belt-type continuously variable transmission according to a third embodiment of the present invention;
Fig. 8 is a flowchart representing abnormality determination control performed by the abnormality determining device for a belt-type continuously variable transmission according to the third embodiment of the present invention;
Fig. 9 is a view of a system configuration illustrating an engine including an abnormality determining device for a belt-type continuously variable transmission according to a fourth embodiment of the present invention;
Fig. 10 is a flowchart representing abnormality determination control performed by the abnormality determining device for a belt-type continuously variable transmission according to the fourth embodiment of the present invention; and
Fig. 11 is a conceptual view representing a graph of the abnormality determination control performed by the abnormality determining device for a belt-type continuously variable transmission according to the fourth embodiment of the present invention.

### DESCRIPTION OF THE PREFERRED EMBODIMENT

In the following, an abnormality determining device for a belt-type continuously variable transmission according to embodiments of the present invention will be described with reference to the accompanying the drawings.

### [First Embodiment]

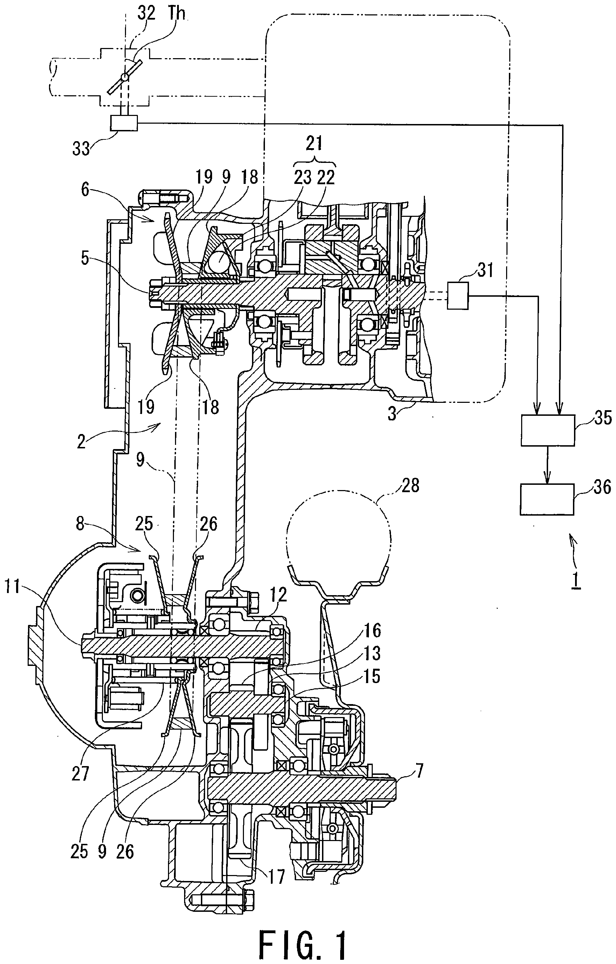

An abnormality determining device for a belt-type continuously variable transmission according to a first embodiment of the present invention will be described with reference to Figs. 1 to 3.

An abnormality determining device 1 determines abnormality in a belt-type continuously variable transmission 2 and indicates a user to perform maintenance or repair on the belt-type continuously variable transmission 2.

As shown in Fig. 1, the belt-type continuously variable transmission 2 according to the embodiment includes a drive pulley 6 provided on a crankshaft 5 of an engine 3, an idler pulley 8 connected to an axle shaft 7, and a V-belt 9 wrapped around the drive pulley 6 and the idler pulley 8.

The crankshaft 5 of the engine 3 is a drive shaft of the belt-type continuously variable transmission 2. The axle shaft 7 is an idler shaft that obtains a drive force from the belt-type continuously variable transmission 2 through a driven shaft 11 on which the idler pulley 8 is provided, a gear 12 fixed to the driven shaft 11, a gear 13 to be meshed with the gear 12, an intermediate shaft 15 having the gear 13, a gear 16 fixed to the intermediate shaft 15, and a gear 17 to be meshed with the gear 16.

The drive pulley 6 includes a movable face 18 movable in an axial direction of the crankshaft 5, a fixed face 19 fixed to the crankshaft 5, and a drive mechanism 21 that causes the movable face 18 and the fixed face 19 to approach and separate from each other.

The movable face 18 and the fixed face 19 face each other with a V-shaped groove therebetween. The movable face 18 is arranged closer to the engine 3, and the fixed face 19 is arranged apart from the engine 3, i.e., on a distal end side of the crankshaft 5. The movable face 18 moves in the axial direction of the crankshaft 5 to increase or decrease a width of the V-shaped groove to thereby change an effective diameter of the drive pulley 6, or a contact diameter with the V-belt 9.

The drive mechanism 21 includes a movable drive plate 22 and a weight roller 23. The movable drive plate 22 is arranged on a back surface side of the movable face 18, that is, to a position closer to the engine 3 than the movable face 18 to rotate integrally with the movable face 18. The weight roller 23 is held between the movable face 18 and the movable drive plate 22.

An interval between the movable drive plate 22 and the movable face 18 is gradually decreased toward an outer circumference thereof.

Meanwhile, the idler pulley 8 includes a movable face 25 movable in an axial direction of the driven shaft 11, a fixed face 26 fixed to the driven shaft 11, and a spring 27 that presses the movable face 25 in a direction to approach the fixed face 26.

The movable face 25 and the fixed face 26 face each other with a V-shaped groove therebetween. The fixed face 26 is arranged closer to a wheel 28, and the movable face 25 is arranged apart from the wheel 28. That is, the idler pulley 8 and the drive pulley 6 have reversed arrangement relationships between the movable face 18 and the fixed face 19 and between the movable face 25 and the fixed face 26. The movable face 25 moves in the axial direction of the driven shaft 11 to increase or decrease a width of the V-shaped groove to thereby change an effective diameter of the idler pulley 8, or a contact diameter with the V-belt 9.

In the belt-type continuously variable transmission 2, when the crankshaft 5 is rotated at high speed, a centrifugal force is generated on the weight roller 23. The weight roller 23 causes the movable face 18 and the fixed face 19 to approach each other by the centrifugal force to increase the effective diameter and the contact diameter with the V-belt 9 wrapped around the drive pulley 6. The V-belt 9 is thereby pulled toward the drive pulley 6 to bite into the V-shaped groove of the idler pulley 8 against the spring 27. The effective diameter and the contact diameter of the idler pulley 8 are thereby decreased.

A transmission gear ratio of the belt-type continuously variable transmission 2 is increased by the series of operations of the belt-type continuously variable transmission 2.

In the belt-type continuously variable transmission 2, when the crankshaft 5 is rotated at low speed, the centrifugal force applied to the weight roller 23 is reduced.

When the centrifugal force on the weight roller 23 is reduced, the spring 27 causes the movable face 25 and the fixed face 26 to approach each other to increase the effective diameter and the contact diameter with the V-belt 9 wrapped around the idler pulley 8. The V-belt 9 is thereby pulled toward the idler pulley 8 to bite into the V-shaped groove of the drive pulley 6. The effective diameter and the contact diameter of the drive pulley 6 are thereby decreased. The transmission gear ratio of the belt-type continuously variable transmission 2 is decreased by the series of operations of the belt-type continuously variable transmission 2.

In Fig. 1, the pulleys 6 and 8 are shown to have a high transmission gear ratio in a portion between the shafts 5 and 11, and a low transmission gear ratio in a portion outside the shafts 5 and 11.

The abnormality determining device 1 includes an engine speed sensor 31, a throttle valve opening sensor 33, a determining section 35, and a warning section 36. The engine speed sensor 31 detects a rotation speed NE of the engine 3. The throttle valve opening sensor 33 detects an opening degree Th of a throttle valve 32 that adjusts an air intake of the engine 3. The determining section 35 determines whether or not the belt-type continuously variable transmission 2 is abnormal based on degree or magnitude of a change in the rotation speed NE of the engine 3 relative to the opening degree Th of the throttle valve 32.

The warning section 36 issues a warning or an alarm when the belt-type continuously variable transmission 2 is continuously determined to be abnormal for a period longer than a preliminarily-set predetermined failure determination time period Tf.

The engine speed sensor 31 detects a rotation speed of the crankshaft 5 or a rotation speed of a camshaft, not shown, that drives a valve mechanism, not shown, as the rotation speed NE of the engine 3.

The throttle valve 32 is an air flow control valve arranged in an intake system of the engine 3. The throttle valve 32 is generally a butterfly valve.

The throttle valve opening sensor 33 detects the opening degree of the throttle valve 32 based on a rotation amount of a valve element, not shown, of the throttle valve 32.

The warning section 36 informs that operations such as inspection, maintenance, and repair of the belt-type continuously variable transmission 2 are required by a method easily noticed by a user such as a visual approach, an auditory approach, and a haptic approach. To be more specific, the warning section 36 uses a lighting device such as an LED, a loudspeaker, a pendulum that excites oscillation, or the like.

Abnormality determination control performed by the abnormality determining device 1 will be more specifically described.

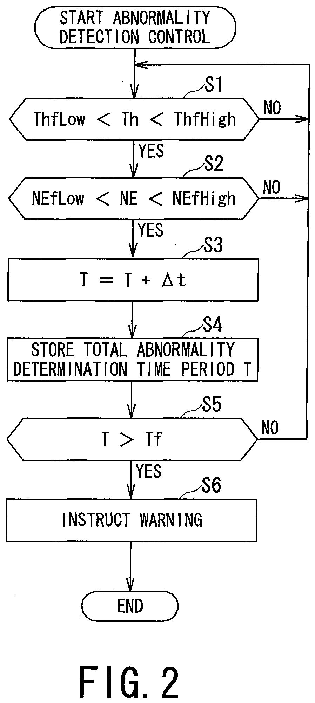

Fig. 2 is a flowchart representing the abnormality determination control performed by the abnormality determining device for the belt-type continuously variable transmission according to the first embodiment of the present invention.

As described in the flowchart of Fig. 2, the determining section 35 of the abnormality determining device 1 according to the embodiment determines the belt-type continuously variable transmission 2 to be abnormal when the rotation speed NE of the engine 3 is included in a predetermined abnormality determination range preliminarily set for each level of the opening degree Th of the throttle valve 32.

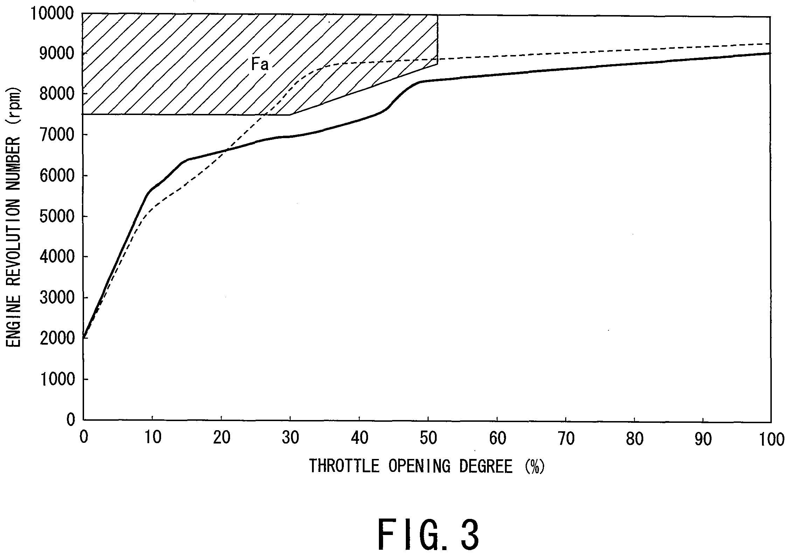

The determining section 35 determines the belt-type continuously variable transmission 2 to be normal when the rotation speed NE of the engine 3 is not included in the abnormality determination range. That is, the determining section 35 has a two-dimensional abnormality determination range Fa (described later using Fig. 3) in which the belt-type continuously variable transmission 2 is determined to be abnormal when the opening degree Th (0% ≤ Th ≤ 100%) of the throttle valve 32 and the rotation speed NE of the engine 3 are shown on a plane.

More specifically, the determining section 35 first determines whether or not the opening degree Th of the throttle valve 32 detected by the throttle valve opening sensor 33 is within an abnormal opening degree range (low abnormal opening degree ThfLow < opening degree Th < high abnormal opening degree ThfHigh) (step S1).

When the opening degree Th is within the abnormal opening degree range (low abnormal opening degree ThfLow < opening degree Th < high abnormal opening degree ThfHigh), the determining section 35 proceeds to step S2.

On the other hand, when the opening degree Th is out of the abnormal opening degree range (low abnormal opening degree ThfLow < opening degree Th < high abnormal opening degree ThfHigh), the determining section 35 repeats the step S1.

Subsequently, the determining section 35 determines whether or not the rotation speed of the crankshaft 5 detected by the engine speed sensor 31, i.e., the rotation speed NE of the engine 3 is within an abnormal engine rotation speed range (low abnormal engine rotation speed NEfLow < rotation speed NE < high abnormal engine rotation speed NEfHigh) (step S2).

When the rotation speed NE is within the abnormal engine rotation speed range (low abnormal engine rotation speed NEfLow < rotation speed NE < high abnormal engine rotation speed NEfHigh), the determining section 35 proceeds to step S3.

On the other hand, when the rotation speed NE is out of the abnormal engine rotation speed range (low abnormal engine rotation speed NEfLow < rotation speed NE < high abnormal engine rotation speed NEfHigh), the determining section 35 returns to the step S1, and repeats the abnormality determination control.

The abnormal opening degree range (low abnormal opening degree ThfLow < opening degree Th < high abnormal opening degree ThfHigh) and the abnormal engine rotation speed range (low abnormal engine rotation speed NEfLow < rotation speed NE < high abnormal engine rotation speed NEfHigh) define the abnormality determination range Fa that spreads in a planar manner by plotting the opening degree Th and the rotation speed NE on two axes perpendicular to each other.

When the opening degree Th and the engine rotation speed NE are plotted in an orthogonal coordinate system with the opening degree Th and the rotation speed NE as the respective axes, a region having a rectangular shape, or other appropriate shapes such as a step-like shape or a polygonal shape in which the abnormal engine rotation speed range is changed for each level of the opening degree Th or the abnormal opening degree range is changed for each level of the rotation speed NE, an oval shape, and a circular shape may be set for the abnormality determination range Fa.

That is, the determining section 35 searches whether or not the opening degree Th of the throttle valve 32 and the rotation speed NE of the engine 3 are within the abnormality determination range Fa in the step S1 and step S2.

Subsequently, the determining section 35 measures an abnormality determination time period Δt (step S3) and adds the abnormality determination time period Δt to a total abnormality determination time period T. That is, the determining section 35 calculates a total abnormality determination time period T (a current value) = the total abnormality determination time period T (a previous value) + the abnormality determination time period Δt, and stores the new total abnormality determination time period T (step S4).

A cycle for executing the abnormality determination control may be employed as the abnormality determination time period Δt. The total abnormality determination time period T is stored in a memory such as an EEPROM so as to be stored even when a vehicle is powered OFF.

Subsequently, the determining section 35 determines whether or not the total abnormality determination time period T exceeds the failure determination time period Tf (step S5).

In this determination, when the total abnormality determination time period T exceeds the failure determination time period Tf, the determining section 35 instructs the warning section 36 to issue a warning (step S6) and then terminates the process.

On the other hand, when the total abnormality determination time period T does not exceed the failure determination time period Tf, the determining section 35 returns to step S1, and repeats the abnormality determination control.

Fig. 3 shows a graph representing the abnormality determination control performed by the abnormality determining device for the belt-type continuously variable transmission according to the first embodiment of the present invention.

As shown in Fig. 3, the belt-type continuously variable transmission 2 according to the embodiment has a relationship between the opening degree Th and the engine rotation speed NE indicated by a solid line at a time of being newly manufactured or subjected to overhaul in which components such as the V-belt 9 are appropriately replaced. However, when the belt-type continuously variable transmission 2 is deteriorated, the relationship between the opening degree Th and the engine rotation speed NE is changed into a relationship indicated by a dashed line.

More specifically, in the deteriorated belt-type continuously variable transmission 2, the engine rotation speed NE almost fully rises while the opening degree of the throttle valve 32 is still low as compared to the new or almost new belt-type continuously variable transmission 2.

Thus, the abnormality determining device 1 determines the belt-type continuously variable transmission 2 to be abnormal at a time when the opening degree Th is within the abnormal opening degree range (low abnormal opening degree ThfLow < opening degree Th < high abnormal opening degree ThfHigh) and the rotation speed NE is within the abnormal engine rotation speed range (low abnormal engine rotation speed NEfLow < rotation speed NE < high abnormal engine rotation speed NEfHigh). That is, when the opening degree Th and the rotation speed NE are within the abnormality determination range Fa.

In short, the abnormality determining device 1 determines whether or not the belt-type continuously variable transmission 2 is abnormal by searching whether or not the opening degree Th of the throttle valve 32 and the engine rotation speed NE are included in the two-dimensional abnormality determination range Fa.

Since the V-belt 9 and the weight roller 23 of the belt-type continuously variable transmission 2 are worn with use, the V-belt 9 and the weight roller 23 need to be periodically replaced. However, a user may not notice the wear of the V-belt 9 or the weight roller 23, or the abnormality in the belt-type continuously variable transmission 2 until fatal failure symptoms become apparent, for example, until fuel consumption is noticeably decreased or the vehicle stops running due to disconnection of the V-belt 9.

Thus, the abnormality determining device 1 for the belt-type continuously variable transmission 2 according to the present embodiment determines the abnormality in the belt-type continuously variable transmission 2 based on the relationship between the opening degree Th of the throttle valve 32 and the rotation speed NE of the engine 3. When a cumulative duration of an abnormal state exceeds the failure determination time period Tf, the abnormality determining device 1 urges a user to perform inspection, maintenance or repair on the belt-type continuously variable transmission 2.

To determine the abnormality in the belt-type continuously variable transmission 2, the abnormality determining device 1 for the belt-type continuously variable transmission 2 according to the present embodiment does not analogize conditions of respective components such as the V-belt 9 and the weight roller 23, but monitors whether or not functions and performance of the entire belt-type continuously variable transmission 2 are maintained. Accordingly, the abnormality determining device 1 of the present first embodiment can detect the abnormality in the entire belt-type continuously variable transmission 2 such as an abnormal increase or decrease in the V-shaped groove width, wear of the V-belt 9, and a change in frictional coefficient between the V-belt 9 and the pulleys 6 and 8.

Moreover, the abnormality determining device 1 for the belt-type continuously variable transmission 2 of the present embodiment determines the abnormality in the belt-type continuously variable transmission 2 by using detection items, such as the opening degree Th of the throttle valve 32 and the rotation speed NE of the engine 3, to be originally used for operation control of the engine 3. Accordingly, the number of components, assembling efficiency, and costs of the engine 3, the belt-type continuously variable transmission 2, and a control device, not shown, as existing arrangements are not affected.

### [Second Embodiment]

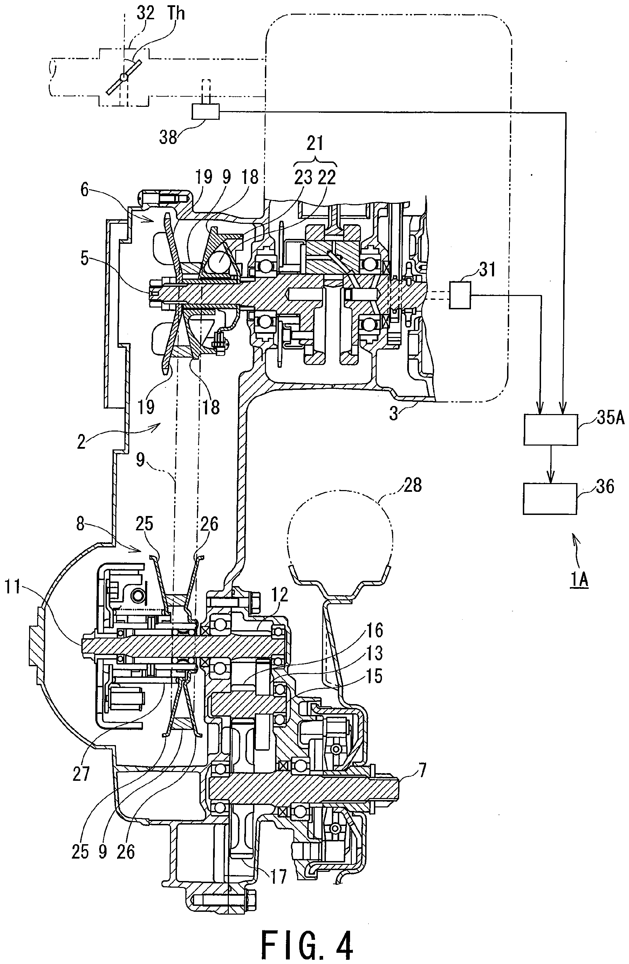

An abnormality determining device for a belt-type continuously variable transmission according to a second embodiment of the present invention will be described hereunder with reference to Figs. 4 to 6.

Fig. 4 shows a system configuration of an engine including the abnormality determining device for a belt-type continuously variable transmission according to the second embodiment.

In the second embodiment, elements corresponding to those of the first embodiment are assigned with the same reference numerals to omit the duplicated description.

As shown in Fig. 4, an abnormality determining device 1A according to the present embodiment includes the engine speed sensor 31, a pressure sensor 38, and a determining section 35A. The engine speed sensor 31 detects a rotation speed NE of the engine 3. The pressure sensor 38 detects an intake pressure PM of the engine 3. The determining section 35A determines whether or not the belt-type continuously variable transmission 2 is abnormal based on degree or magnitude of a change in the rotation speed NE of the engine 3 relative to the intake pressure PM detected by the pressure sensor 38.

Abnormality determination control performed by the abnormality determining device 1A will be more specifically described.

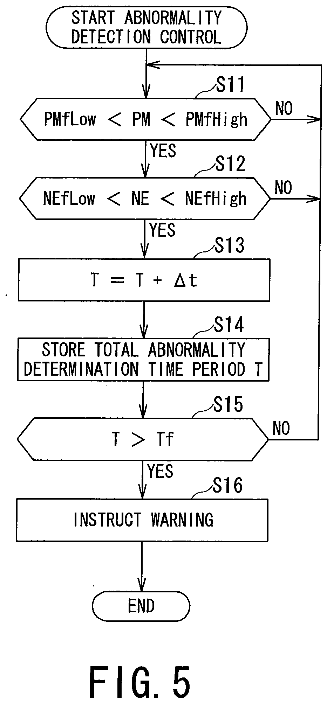

Fig. 5 is a flowchart representing the abnormality determination control performed by the abnormality determining device for the belt-type continuously variable transmission according to the second embodiment.

As shown in Fig. 5, the determining section 35A of the abnormality determining device 1A determines the belt-type continuously variable transmission 2 to be abnormal in an occasion when the rotation speed NE of the engine 3 is included in a predetermined abnormality determination range preliminarily set for each level of the intake pressure PM of the engine 3.

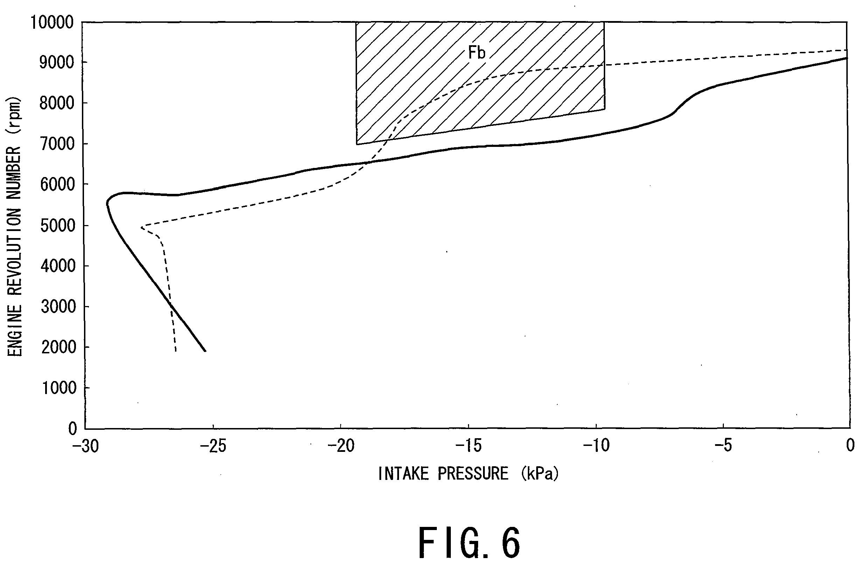

On the other hand, the determining section 35A determines the belt-type continuously variable transmission 2 to be normal in an occasion when the rotation speed NE of the engine 3 is not included in the abnormality determination range. That is, the determining section 35A has a two-dimensional abnormality determination range Fb (described later using Fig. 6) in which the belt-type continuously variable transmission 2 is determined to be abnormal when the intake pressure PM (maximum intake pressure (negative pressure) ≤ intake pressure PM ≤ atmospheric pressure) of the engine 3 and the rotation speed NE of the engine 3 are shown on a plane.

More specifically, the determining section 35A first determines whether or not the intake pressure PM of the engine 3 detected by the pressure sensor 38 is within an abnormal intake pressure range (low abnormal intake pressure PMfLow < intake pressure PM < high abnormal intake pressure PMfHigh) (step S11).

When the intake pressure PM is within the abnormal intake pressure range (low abnormal intake pressure PMfLow < intake pressure PM < high abnormal intake pressure PMfHigh), the determining section 35A proceeds to step S12.

On the other hand, when the intake pressure PM is out of the abnormal intake pressure range (low abnormal intake pressure PMfLow < intake pressure PM < high abnormal intake pressure PMfHigh), the determining section 35A repeats the step S11.

Subsequently, the determining section 35A determines whether or not the rotation speed of the crankshaft 5 detected by the engine speed sensor 31, i.e., the rotation speed NE of the engine 3 is within an abnormal engine rotation speed range (low abnormal engine rotation speed NEfLow < rotation speed NE < high abnormal engine rotation speed NEfHigh) (step S12).

In this operation, when the rotation speed NE is within the abnormal engine rotation speed range (low abnormal engine rotation speed NEfLow < rotation speed NE < high abnormal engine rotation speed NEfHigh), the determining section 35A proceeds to step S13.

On the other hand, when the rotation speed NE is out of the abnormal engine rotation speed range (low abnormal engine rotation speed NEfLow < rotation speed NE < high abnormal engine rotation speed NEfHigh), the determining section 35A returns to the step S11, and repeats the abnormality determination control.

The abnormal intake pressure range (low abnormal intake pressure PMfLow < intake pressure PM < high abnormal intake pressure PMfHigh) and the abnormal engine rotation speed range (low abnormal engine rotation speed NEfLow < rotation speed NE < high abnormal engine rotation speed NEfHigh) define the abnormality determination range Fb that spreads in a planar manner by plotting the intake pressure PM and the rotation speed NE on two axes perpendicular to each other.

When the intake pressure PM and the engine rotation speed NE are plotted in an orthogonal coordinate system with the intake pressure PM and the rotation speed NE as the respective axes, a region having a rectangular shape, or other appropriate shapes such as a step-like shape or a polygonal shape in which the abnormal engine rotation speed range is changed for each level of the intake pressure PM or the abnormal intake pressure range is changed for each level of the rotation speed NE, an oval shape, and a circular shape may be set for the abnormality determination range Fb.

That is, the determining section 35A searches whether or not the intake pressure PM and the rotation speed NE of the engine 3 are within the abnormality determination range Fb in the step S11 and step S12.

Subsequently, the determining section 35A measures an abnormality determination time period Δt (step S13) and adds the abnormality determination time period Δt to a total abnormality determination time period T. That is, the determining section 35A calculates a total abnormality determination time period T (a current value) = the total abnormality determination time period T (a previous value) + the abnormality determination time period Δt, and stores the new total abnormality determination time period T (step S14).

A cycle for executing the abnormality determination control may be employed as the abnormality determination time period Δt. The total abnormality determination time period T is stored in a memory such as an EEPROM so as to be stored even when a vehicle is powered OFF.

Subsequently, the determining section 35A determines whether or not the total abnormality determination time period T exceeds a failure determination time period Tf (step S 15).

At this time, when the total abnormality determination time period T exceeds the failure determination time period Tf, the determining section 35A instructs the warning section 36 to issue a warning (step S16), and terminates the process.

On the other hand, when the total abnormality determination time period T does not exceed the failure determination time period Tf, the determining section 35A returns to step S11, and repeats the abnormality determination control.

Fig. 6 is a graph representing the abnormality determination control performed by the abnormality determining device for the belt-type continuously variable transmission according to the second embodiment of the present invention.

As shown in Fig. 6, the belt-type continuously variable transmission 2 of the second embodiment has a relationship between the intake pressure PM and the engine rotation speed NE indicated by a solid line at a time of being newly manufactured or subjected to overhaul in which components such as the V-belt 9 are appropriately replaced. However, when the belt-type continuously variable transmission 2 is deteriorated, the relationship between the intake pressure PM and the engine rotation speed NE is changed into a relationship indicated by a dashed line.

More specifically, in the deteriorated belt-type continuously variable transmission 2, the intake pressure PM rises in an early stage relative to a rise in the engine rotation speed NE as compared to the new or almost new belt-type continuously variable transmission 2.

Thus, the abnormality determining device 1A determines the belt-type continuously variable transmission 2 to be abnormal when the intake pressure PM is within the abnormal intake pressure range (low abnormal intake pressure PMfLow < intake pressure PM < high abnormal intake pressure PMfHigh) and the rotation speed NE is within the abnormal engine rotation speed range (low abnormal engine rotation speed NEfLow < rotation speed NE < high abnormal engine rotation speed NEfHigh), that is, when the intake pressure PM and the rotation speed NE are within the abnormality determination range Fb.

In short, the abnormality determining device 1A determines whether or not the belt-type continuously variable transmission 2 is abnormal by searching whether or not the intake pressure PM and the rotation speed NE of the engine 3 are included in the two-dimensional abnormality determination range Fb.

Since the V-belt 9 and the weight roller 23 of the belt-type continuously variable transmission 2 are worn with use, the V-belt 9 and the weight roller 23 need to be periodically replaced. However, a user may not notice the wear of the V-belt 9 or the weight roller 23, or the abnormality in the belt-type continuously variable transmission 2 until fatal failure symptoms become apparent, for example, until fuel consumption is noticeably decreased or the vehicle stops running due to disconnection of the V-belt 9.

Thus, the abnormality determining device 1A for the belt-type continuously variable transmission 2 according to the present embodiment determines the abnormality in the belt-type continuously variable transmission 2 based on the relationship between the intake pressure PM and the rotation speed NE of the engine 3. When a cumulative duration of an abnormal state exceeds the failure determination time period Tf, the abnormality determining device 1A urges a user to perform inspection, maintenance, or repair on the belt-type continuously variable transmission 2.

To determine the abnormality in the belt-type continuously variable transmission 2, the abnormality determining device 1A for the belt-type continuously variable transmission 2 according to the present embodiment does not analogize conditions of respective components such as the V-belt 9 and the weight roller 23, but monitors whether or not functions and performance of the entire belt-type continuously variable transmission 2 are maintained. Accordingly, the abnormality determining device 1A can detect the abnormality in the entire belt-type continuously variable transmission 2 such as an abnormal increase or decrease in the V-shaped groove width, wear of the V-belt 9, and a change in frictional coefficient between the V-belt 9 and the pulleys 6 and 8.

Furthermore, the abnormality determining device 1A for the belt-type continuously variable transmission 2 according to the present second embodiment determines the abnormality in the belt-type continuously variable transmission 2 by using detection items, such as the intake pressure PM and the rotation speed NE of the engine 3, to be originally used for operation control of the engine 3. Accordingly, the number of components, assembling efficiency, and costs of the engine 3, the belt-type continuously variable transmission 2, and a control device, not shown, as existing arrangements are not affected.

### [Third Embodiment]

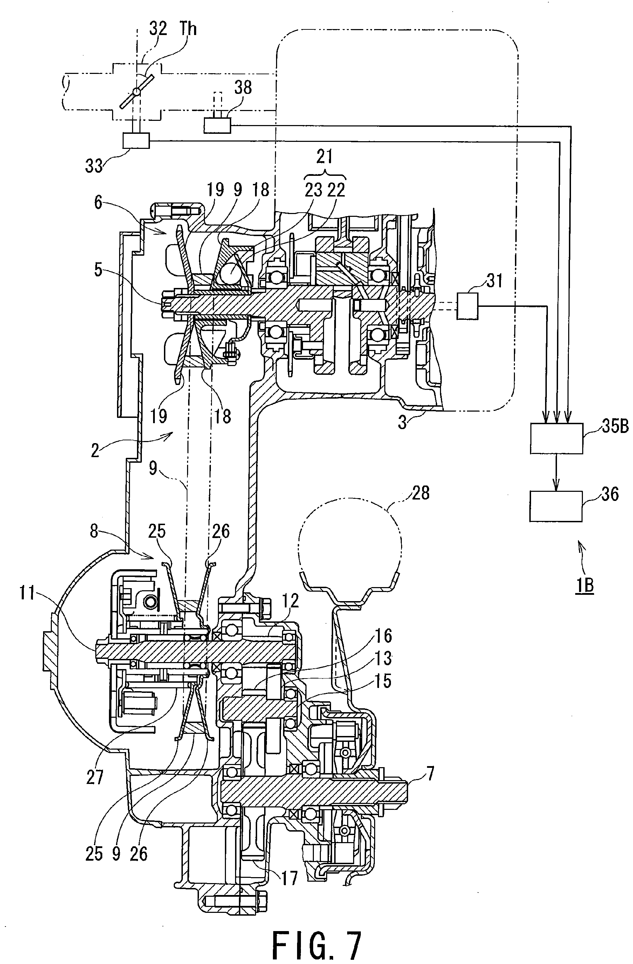

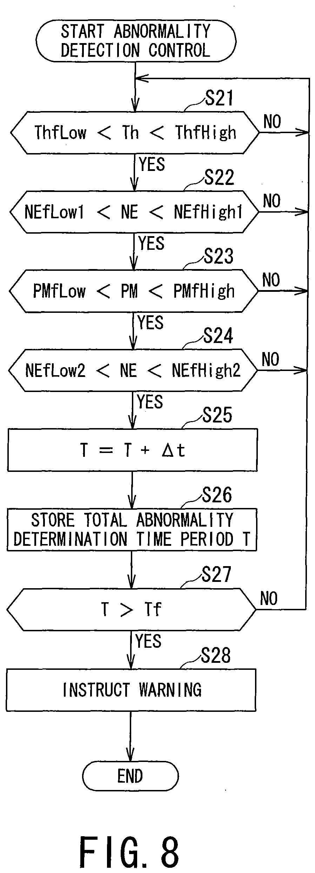

An abnormality determining device for a belt-type continuously variable transmission according to a third embodiment of the present invention will be described hereunder with reference to Figs. 7 and 8.

Fig. 7 shows a system configuration of an engine including the abnormality determining device for a belt-type continuously variable transmission according to the third embodiment of the present invention.

In the present third embodiment, elements corresponding to those of the first and second embodiments are assigned with the same reference numerals to omit the duplicated description.

As shown in Fig. 7, an abnormality determining device 1B according to the present embodiment includes the engine speed sensor 31, the throttle valve opening sensor 33, the pressure sensor 38, and a determining section 35B. The engine speed sensor 31 detects a rotation speed NE of the engine 3. The throttle valve opening sensor 33 detects an opening degree Th of the throttle valve 32 that adjusts an air intake of the engine 3. The pressure sensor 38 detects an intake pressure PM of the engine 3. The determining section 35B determines whether or not the belt-type continuously variable transmission 2 is abnormal based on the magnitude of a change in the rotation speed NE of the engine 3 relative to the opening degree Th of the throttle valve 32, and the magnitude of a change in the rotation speed NE of the engine 3 relative to the intake pressure PM detected by the pressure sensor 38.

Hereunder, abnormality determination control performed by the abnormality determining device 1B will be more specifically described.

Fig. 8 is a flowchart representing the abnormality determination control performed by the abnormality determining device for the belt-type continuously variable transmission according to the third embodiment.

As shown in Fig. 8, the determining section 35B of the abnormality determining device 1B of the present embodiment determines the belt-type continuously variable transmission 2 to be abnormal when the rotation speed NE of the engine 3 is included in a predetermined abnormality determination range preliminarily set for each level of the intake pressure PM of the engine 3. The determining section 35B determines the belt-type continuously variable transmission 2 to be normal when the rotation speed NE of the engine 3 is not included in the abnormality determination range.

The determining section 35B also determines the belt-type continuously variable transmission 2 to be abnormal when the rotation speed NE of the engine 3 is included in a predetermined abnormality determination range preliminarily set for each level of the opening degree Th of the throttle valve 32, and the rotation speed NE of the engine 3 is included in the predetermined abnormality determination range preliminarily set for each level of the intake pressure PM. The determining section 35B determines the belt-type continuously variable transmission 2 to be normal in other cases.

That is, the determining section 35B has a two-dimensional abnormality determination range Fa in which the belt-type continuously variable transmission 2 is determined to be abnormal when the opening degree Th (0% ≤ Th ≤ 100%) of the throttle valve 32 and the rotation speed NE of the engine 3 are shown on a plane, and a two-dimensional abnormality determination range Fb in which the belt-type continuously variable transmission 2 is determined to be abnormal when the intake pressure PM (maximum intake pressure (negative pressure) ≤ intake pressure PM ≤ atmospheric pressure) of the engine 3 and the rotation speed NE of the engine 3 are shown on a plane.

More specifically, the determining section 35B determines whether or not the opening degree Th of the throttle valve 32 detected by the throttle valve opening sensor 33 is within an abnormal opening degree range (low abnormal opening degree ThfLow < opening degree Th < high abnormal opening degree ThfHigh) (step S21).

When the opening degree Th is within the abnormal opening degree range (low abnormal opening degree ThfLow < opening degree Th < high abnormal opening degree ThfHigh), the determining section 35B proceeds to step S22.

On the other hand, when the opening degree Th is out of the abnormal opening degree range (low abnormal opening degree ThfLow < opening degree Th < high abnormal opening degree ThfHigh), the determining section 35B repeats the step S21.

Subsequently, the determining section 35B determines whether or not the rotation speed of the crankshaft 5 detected by the engine speed sensor 31, i.e., the rotation speed NE of the engine 3 is within a first abnormal engine rotation speed range (first low abnormal engine rotation speed NEfLow1 < rotation speed NE < first high abnormal engine rotation speed NEfHigh1) (step S22).

When the rotation speed NE is within the first abnormal engine rotation speed range (first low abnormal engine rotation speed NEfLow1 < rotation speed NE < first high abnormal engine rotation speed NEfHigh1), the determining section 35B proceeds to step S23.

On the other hand, when the rotation speed NE is out of the first abnormal engine rotation speed range (first low abnormal engine rotation speed NEfLow1 < rotation speed NE < first high abnormal engine rotation speed NEfHigh1), the determining section 35B returns to the step S21, and repeats the abnormality determination control.

Subsequently, the determining section 35B determines whether or not the intake pressure PM of the engine 3 detected by the pressure sensor 38 is within an abnormal intake pressure range (low abnormal intake pressure PMfLow < intake pressure PM < high abnormal intake pressure PMfHigh) (step S23).

When the intake pressure PM is within the abnormal intake pressure range (low abnormal intake pressure PMfLow < intake pressure PM < high abnormal intake pressure PMfHigh), the determining section 35B proceeds to step S24.

On the other hand, when the intake pressure PM is out of the abnormal intake pressure range (low abnormal intake pressure PMfLow < intake pressure PM < high abnormal intake pressure PMfHigh), the determining section 35B repeats the step S21.

Subsequently, the determining section 35B determines whether or not the rotation speed of the crankshaft 5 detected by the engine speed sensor 31, i.e., the rotation speed NE of the engine 3 is within a second abnormal engine rotation speed range (second low abnormal engine rotation speed NEfLow2 < rotation speed NE < second high abnormal engine rotation speed NEfHigh2) (step S24).

When the rotation speed NE is within the second abnormal engine rotation speed range (second low abnormal engine rotation speed NEfLow2 < rotation speed NE < second high abnormal engine rotation speed NEfHigh2), the determining section 35B proceeds to step S25.

On the other hand, when the rotation speed NE is out of the second abnormal engine rotation speed range (second low abnormal engine rotation speed NEfLow2 < rotation speed NE < second high abnormal engine rotation speed NEfHigh2), the determining section 35B returns to the step S21, and repeats the abnormality determination control.

The abnormal opening degree range (low abnormal opening degree ThfLow < opening degree Th < high abnormal opening degree ThfHigh) and the first abnormal engine rotation speed range (first low abnormal engine rotation speed NEfLow1 < rotation speed NE < first high abnormal engine rotation speed NEfHigh1) correspond to the abnormality determination range Fa in the first embodiment.

Further, the abnormal intake pressure range (low abnormal intake pressure PMfLow < intake pressure PM < high abnormal intake pressure PMfHigh) and the second abnormal engine rotation speed range (second low abnormal engine rotation speed NEfLow2 < rotation speed NE < second high abnormal engine rotation speed NEfHigh2) correspond to the abnormality determination range Fb in the second embodiment.

That is, the determining section 35B searches whether or not the opening degree Th of the throttle valve 32, the intake pressure PM and the rotation speed NE of the engine 3 are within the abnormality determination ranges Fa and Fb in the steps S21 to S24.

Subsequently, the determining section 35B measures an abnormality determination time period Δt (step S25) and adds the abnormality determination time period Δt to a total abnormality determination time period T. That is, the determining section 35B calculates a total abnormality determination time period T (a current value) = the total abnormality determination time period T (a previous value) + the abnormality determination time period Δt, and stores the new total abnormality determination time period T (step S26). A cycle for executing the abnormality determination control may be employed as the abnormality determination time period Δt. The total abnormality determination time period T is stored in a memory such as an EEPROM so as to be stored even when a vehicle is powered OFF.

Subsequently, the determining section 35B determines whether or not the total abnormality determination time period T exceeds a failure determination time period Tf (step S27).

In this determination, when the total abnormality determination time period T exceeds the failure determination time period Tf, the determining section 35B instructs the warning section 36 to issue a warning (step S28), and terminates the process.

On the other hand, when the total abnormality determination time period T does not exceed the failure determination time period Tf, the determining section 35B returns to step S21, and repeats the abnormality determination control.

To determine the abnormality in the belt-type continuously variable transmission 2, the abnormality determining device 1B for the belt-type continuously variable transmission 2 according to the present embodiment does not analogize the conditions of the respective components such as the V-belt 9 and the weight roller 23, but monitors whether or not functions and performance of the entire belt-type continuously variable transmission 2 are maintained. Accordingly, the abnormality determining device 1B can detect the abnormality in the entire belt-type continuously variable transmission 2 such as an abnormal increase or decrease in the V-shaped groove width, wear of the V-belt 9, and a change in frictional coefficient between the V-belt 9 and the pulleys 6 and 8.

Since the abnormality determining device 1B for the belt-type continuously variable transmission 2 according to the present embodiment determines the abnormality in multiple stages by combining the opening degree Th of the throttle valve 32, the intake pressure PM and the rotation speed NE of the engine 3, more reliable determination results can be obtained.

Moreover, the abnormality determining device 1B for the belt-type continuously variable transmission 2 according to the present embodiment determines the abnormality in the belt-type continuously variable transmission 2 by using detection items, such as the opening degree Th of the throttle valve 32, the intake pressure PM and the rotation speed NE of the engine 3, to be originally used for operation control of the engine 3. Accordingly, the number of components, assembling efficiency, and costs of the engine 3, the belt-type continuously variable transmission 2, and a control device, not shown, as existing arrangements are not affected.

### [Fourth Embodiment]

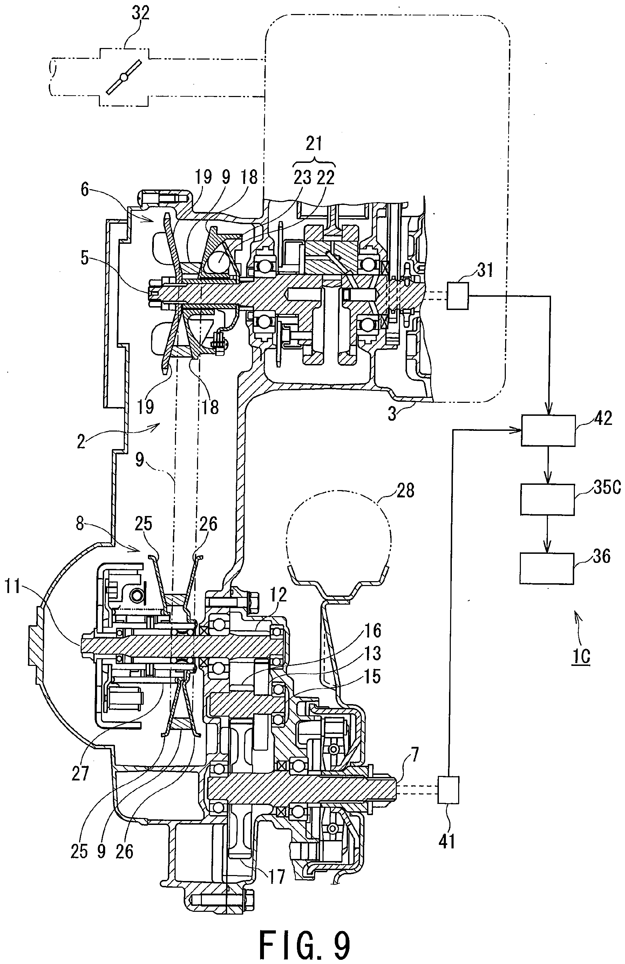

An abnormality determining device for a belt-type continuously variable transmission according to a fourth embodiment of the present invention will be described hereunder with reference to Figs. 9 to 11.

Fig. 9 shows a system configuration of an engine including the abnormality determining device for a belt-type continuously variable transmission according to the fourth embodiment of the present invention.

In the present embodiment, elements corresponding to those of the first embodiment are assigned with the same reference numerals to omit the duplicated description.

As shown in Fig. 9, an abnormality determining device 1C according to the present fourth embodiment includes the engine speed sensor 31, an axle shaft speed sensor 41, a comparison vehicle speed calculating section 42, and a determining section 35C.

The engine speed sensor 31 detects a rotation speed NE of the engine 3. The axle shaft speed sensor 41 detects a rotation speed of the axle shaft 7. The comparison vehicle speed calculating section 42 calculates a vehicle speed at a predetermined engine rotation speed NEb as a comparison reference based on a ratio of the rotation speed NE of the engine 3 and the rotation speed of the axle shaft 7. The determining section 35C determines whether or not the belt-type continuously variable transmission 2 is abnormal based on the vehicle speed calculated by the comparison vehicle speed calculating section 42.

The comparison vehicle speed calculating section 42 calculates a vehicle speed at, for example, 10,000 rpm as the predetermined engine rotation speed NEb as the comparison reference.

More specifically, when the rotation speed of the engine 3 detected by the engine speed sensor 31 is NE, the vehicle speed obtained from the rotation speed of the axle shaft 7 detected by the axle shaft speed sensor 41 is V, the predetermined engine rotation speed as the comparison reference is NEb, and the vehicle speed at the predetermined engine rotation speed NEb as the comparison reference is Vb, the comparison vehicle speed calculating section 42 calculates the vehicle speed Vb = (the vehicle speed V/the rotation speed NE) x the engine rotation speed NEb based on a simple proportional relationship. By setting the engine rotation speed NEb = 1 rpm, the comparison vehicle speed calculating section 42 may calculate the vehicle speed Vb = the vehicle speed V/the rotation speed NE.

Abnormality determination control performed by the abnormality determining device 1C will be more specifically described.

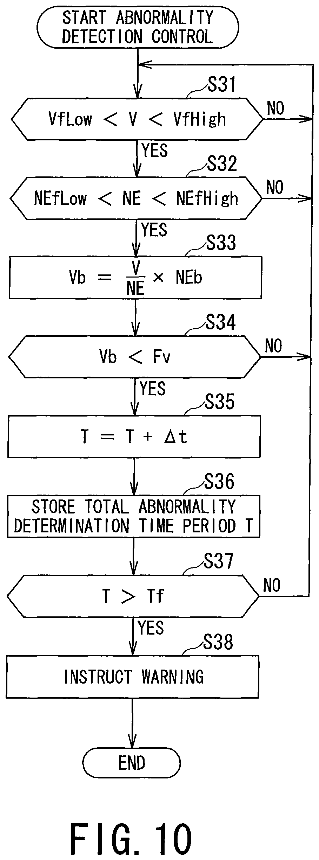

Fig. 10 is a flowchart representing the abnormality determination control process performed by the abnormality determining device for the belt-type continuously variable transmission according to the fourth embodiment of the present invention.

As shown in Fig. 10, the determining section 35C of the abnormality determining device 1C according to the present embodiment determines the belt-type continuously variable transmission 2 to be abnormal when the vehicle speed Vb calculated by the comparison vehicle speed calculating section 42 is included in a preliminarily-set predetermined abnormality determination range. On the other hand, the determining section 35C determines the belt-type continuously variable transmission 2 to be normal when the vehicle speed Vb calculated by the comparison vehicle speed calculating section 42 is not included in the abnormality determination range.

More concretely, the determining section 35C first determines whether or not the vehicle speed V obtained from the rotation speed of the axle shaft 7 detected by the axle shaft speed sensor 41 is within an abnormal vehicle speed range (low abnormal vehicle speed VfLow < vehicle speed V < high abnormal vehicle speed VfHigh) (step S31).

In this determination, when the vehicle speed V is within the abnormal vehicle speed range (low abnormal vehicle speed VfLow < vehicle speed V < high abnormal vehicle speed VfHigh), the determining section 35C proceeds to step S32.

On the other hand, when the vehicle speed V is out of the abnormal vehicle speed range (low abnormal vehicle speed VfLow < vehicle speed V < high abnormal vehicle speed VfHigh), the determining section 35C repeats the step S31.

Subsequently, the determining section 35C determines whether or not the rotation speed of the crankshaft 5 detected by the engine speed sensor 31, i.e., the rotation speed NE of the engine 3 is within an abnormal engine rotation speed range (low abnormal engine rotation speed NEfLow < rotation speed NE < high abnormal engine rotation speed NEfHigh) (step S32).

When the rotation speed NE is within the abnormal engine rotation speed range (low abnormal engine rotation speed NEfLow < rotation speed NE < high abnormal engine rotation speed NEfHigh), the determining section 35C proceeds to step S33.

On the other hand, when the rotation speed NE is out of the abnormal engine rotation speed range (low abnormal engine rotation speed NEfLow < rotation speed NE < high abnormal engine rotation speed NEfHigh), the determining section 35C returns to step S31, and repeats the abnormality determination control.

Subsequently, the comparison vehicle speed calculating section 42 calculates the vehicle speed Vb at, for example, 10,000 rpm as the predetermined engine rotation speed NEb as the comparison reference (step S33).

More specifically, when the rotation speed of the engine 3 detected by the engine speed sensor 31 is NE, the vehicle speed obtained from the rotation speed of the axle shaft 7 detected by the axle shaft speed sensor 41 is V, the predetermined engine rotation speed as the comparison reference is NEb, and the vehicle speed at the predetermined engine rotation speed NEb as the comparison reference is Vb, the comparison vehicle speed calculating section 42 calculates the vehicle speed Vb = (the vehicle speed V/the rotation speed NE) x the engine rotation speed NEb or the vehicle speed Vb = the vehicle speed V/the rotation speed NE based on the simple proportional relationship.

Subsequently, the determining section 35C determines whether or not the vehicle speed Vb at the predetermined engine rotation speed NEb calculated by the comparison vehicle speed calculating section 42 is within an abnormality determination range (vehicle speed Vb < abnormality determination range Fv) (step S34).

In this determination, when the vehicle speed Vb is within the abnormality determination range (vehicle speed Vb < abnormality determination range Fv), the determining section 35C proceeds to step S35.

On the other hand, when the vehicle speed Vb is out of the abnormality determination range (vehicle speed Vb < abnormality determination range Fv), the determining section 35C returns to step S31, and repeats the abnormality determination control.

Subsequently, the determining section 35C measures an abnormality determination time period Δt (step S35) and adds the abnormality determination time period Δt to a total abnormality determination time period T. That is, the determining section 35C calculates a total abnormality determination time period T (a current value) = the total abnormality determination time period T (a previous value) + the abnormality determination time period Δt, and stores the new total abnormality determination time period T (step S36).

A cycle for executing the abnormality determination control may be employed as the abnormality determination time period Δt. The total abnormality determination time period T is stored in a memory such as an EEPROM so as to be stored even when a vehicle is powered OFF.

Subsequently, the determining section 35C determines whether or not the total abnormality determination time period T exceeds a failure determination time period Tf (step S37).

In this determination, when the total abnormality determination time period T exceeds the failure determination time period Tf, the determining section 35C instructs the warning section 36 to issue a warning (step S38), and terminates the process.

On the other hand, when the total abnormality determination time period T does not exceed the failure determination time period Tf, the determining section 35C returns to the step S31, and repeats the abnormality determination control.

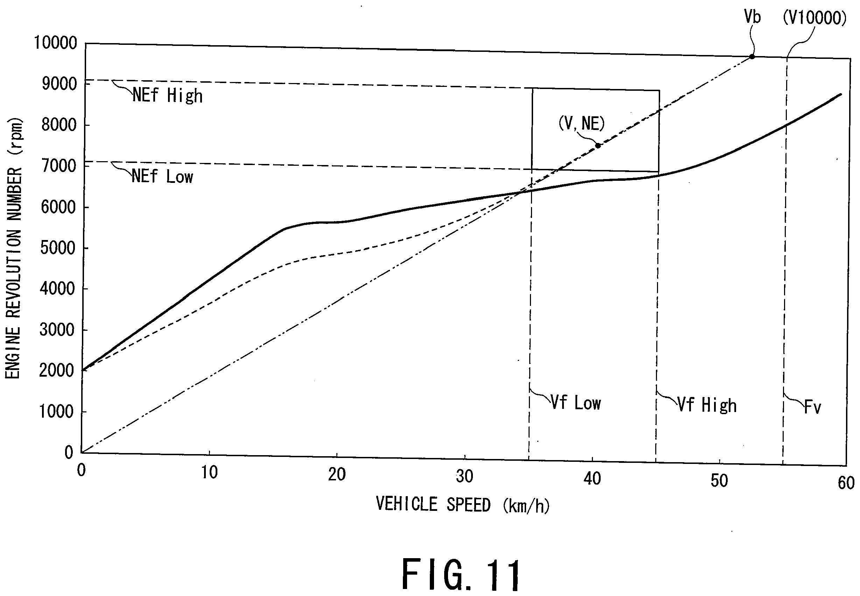

Fig. 11 is a graph representing the abnormality determination control performed by the abnormality determining device for the belt-type continuously variable transmission according to the fourth embodiment of the present invention.

As shown in Fig. 11, the belt-type continuously variable transmission 2 has a relationship between the vehicle speed V and the engine rotation speed NE indicated by a solid line when newly manufactured or subjected to overhaul in which components such as the V-belt 9 are appropriately replaced. However, when the belt-type continuously variable transmission 2 is deteriorated, the relationship between the vehicle speed V and the engine rotation speed NE is changed into a relationship indicated by a dashed line.

More specifically, in the deteriorated belt-type continuously variable transmission 2, the vehicle speed V relative to the engine rotation speed NE is lower than that of the new or almost new belt-type continuously variable transmission 2.

The abnormality determining device 1C calculates the vehicle speed Vb at, for example, 10,000 rpm as the predetermined engine rotation speed NEb as the comparison reference. When the vehicle speed Vb is within the abnormality determination range (vehicle speed Vb < abnormality determination range Fv), the abnormality determining device 1C determines the belt-type continuously variable transmission 2 to be abnormal. The vehicle speed Vb is defined on a tangent line (a tangent line indicated by an alternate long and two short dashes line) to the vehicle speed V and the rotation speed NE on a characteristic line indicated by a dashed line according to the predetermined engine rotation speed NEb as the comparison reference.

That is, the abnormality determining device 1C does not search whether or not the opening degree Th of the throttle valve 32 and the rotation speed NE of the engine 3 are included in the two-dimensional abnormality determination range Fa as in the abnormality determining device 1 according to the first embodiment.

When the abnormality determination range is determined to be 20% or less of a normal vehicle speed (for example, 48 km/hour or less when the normal vehicle speed is 60 km/hour) at 10,000 rpm, the abnormality determining device 1C calculates the vehicle speed Vb by the simple proportion calculation, and compares whether or not the vehicle speed Vb is included in the abnormality determination range (whether or not the vehicle speed Vb is 48 km/hour or less). The abnormality determining device 1C thereby determines whether or not the belt-type continuously variable transmission 2 is abnormal.

Since the V-belt 9 and the weight roller 23 of the belt-type continuously variable transmission 2 are worn with use, the V-belt 9 and the weight roller 23 need to be periodically replaced.

However, a user may not notice the wear of the V-belt 9 or the weight roller 23, or the abnormality in the belt-type continuously variable transmission 2 until fatal failure symptoms become apparent, for example, until fuel consumption is noticeably decreased or the vehicle stops running due to disconnection of the V-belt 9.

Thus, the abnormality determining device 1C for the belt-type continuously variable transmission 2 according to the present embodiment determines the abnormality in the belt-type continuously variable transmission 2 based on the relationship between the rotation speed NE of the engine 3 and the vehicle speed V. When a cumulative duration of an abnormal state exceeds the failure determination time period Tf, the abnormality determining device 1C urges a user to perform inspection, maintenance, or repair on the belt-type continuously variable transmission 2.

To determine the abnormality in the belt-type continuously variable transmission 2, the abnormality determining device 1C for the belt-type continuously variable transmission 2 according to the present embodiment does not analogize the conditions of the respective components such as the V-belt 9 and the weight roller 23, but monitors whether or not functions and performance of the entire belt-type continuously variable transmission 2 are maintained.

Accordingly, the abnormality determining device 1C can detect the abnormality in the entire belt-type continuously variable transmission 2 such as an abnormal increase or decrease in the V-shaped groove width, wear of the V-belt 9, and a change in frictional coefficient between the V-belt 9 and the pulleys 6 and 8.

Moreover, the abnormality determining device 1C for the belt-type continuously variable transmission 2 according to the present embodiment determines the abnormality in the belt-type continuously variable transmission 2 by using detection items, such as the rotation speed NE of the engine 3 and the vehicle speed V, to be originally used for operation control of the engine 3. Accordingly, the number of components, assembling efficiency, and costs of the engine 3, the belt-type continuously variable transmission 2, and a control device, not shown, as existing arrangements are not affected.

Furthermore, the abnormality determining device 1C for the belt-type continuously variable transmission 2 according to the present embodiment determines the abnormality in the belt-type continuously variable transmission 2 based on the vehicle speed Vb at the predetermined engine rotation speed NEb as the comparison reference. Therefore, the comparison vehicle speed calculating section 42 and the determining section 35C do not require high processing capacity and can be provided at lower costs.

Consequently, the abnormality determining devices 1, 1A, 1B, and 1C for the belt-type continuously variable transmission 2 according to the embodiments of the present invention can determine the abnormality in the entire belt-type continuously variable transmission 2 with a simple structure.

It is to be noted that the present invention is not limited to the described embodiments, and other changes or modifications may be made without departing from the scopes of the appended claims.

## Claims

1. A belt-type continuously variable transmission having an abnormality determining device (1), the belt-type continuously variable transmission including a drive pulley provided on a crankshaft of an engine, an idler pulley connected to an axle shaft, and a V-belt (9) wrapped around the drive pulley and the idler pulley, in which:
the drive pulley (6) includes a movable face (18) movable in an axial direction of the crankshaft (5), a fixed face (19) fixed to the crankshaft (5), and a drive mechanism (21) that causes the movable face and the fixed face, which define a V-shaped groove therebetween, to approach and separate from each other;
the drive mechanism (21) includes a movable drive plate (22) disposed on the rear side of the movable face (18) and integrally rotating with the movable face (18) and a weight roller (23) interposed between the movable face (18) and the movable drive plate (22);
the movable face (18) is configured to cause a distance between the V-shaped groove to widen or narrow by being moved in the axial direction of the crankshaft to thereby change the effective diameter of the drive pulley (6) and the contact diameter with the V-belt;
the idler pulley (8) includes a movable face (25) movable in the axial direction of the drive shaft (11), a fixed face (26) fixed to the drive shaft (11), and a spring (27) urging the movable face so as to approach the fixed face (26);
the movable face (25) of the idler pulley (8) is configured to cause a distance between the V-shaped groove to widen or narrow by being moved in the axial direction of the drive shaft to thereby change an effective diameter of the drive pulley (6) or a contact diameter to the V-belt, and
wherein when the crankshaft (5) is rotated at a high speed, a centrifugal force is generated on the weight roller (23) by which the movable face (18) approaches the fixed face (19) of the drive pulley (6) to thereby widen an effective diameter of the V-belt wrapped around the drive pulley and a contact diameter thereof, and when the crankshaft is rotated at a low speed, a centrifugal force caused to the weight roller (23) is reduced by which the movable face is separated from the fixed face (19) of the drive pulley (6) to thereby make narrow the effective diameter of the V-belt wound up around the drive pulley (6) and the contact diameter thereof, and the movable face of the idler pulley (8) approaches the fixed face thereof by the spring (27) to thereby widen the effective diameter of the V-belt wound up around the idler pulley (8) and the contact diameter thereof,
**characterized in that** the abnormality determining device (1) comprises:
an engine speed sensor (31) configured to detect a rotation speed of the engine (3);
a throttle valve opening sensor (33) configured to detect an opening degree of a throttle valve (32) that adjusts an air intake of the engine (3); and
a determining section (35) configured to determine whether or not the belt-type continuously variable transmission is abnormal based on a magnitude of a change in the rotation speed of the engine (3) relative to the opening degree of the throttle valve (32) and to determine that an abnormality occurs in a case when the rotation speed of the engine (3) is large relative to the opening degree of the throttle valve in a low degree of opening area of the throttle valve.

2. The belt-type continuously variable transmission according to claim 1, wherein the determining section (35) determines the belt-type continuously variable transmission to be abnormal when the rotation speed of the engine (3) is included in a predetermined abnormality determination range (Fa) preliminarily set for each level of the opening degree of the throttle valve, and determines the belt-type continuously variable transmission to be normal when the rotation speed of the engine (3) is not included in the abnormality determination range.

3. A belt-type continuously variable transmission having an abnormality determining device (1A), the belt-type continuously variable transmission including a drive pulley provided on a crankshaft of an engine, an idler pulley connected to an axle shaft, and a V-belt (9) wrapped around the drive pulley and the idler pulley, in which:
the drive pulley (6) includes a movable face (18) movable in an axial direction of the crankshaft (5), a fixed face (19) fixed to the crankshaft (5), and a drive mechanism (21) that causes the movable face and the fixed face, which define a V-shaped groove therebetween, to approach and separate from each other;
the drive mechanism (21) includes a movable drive plate (22) disposed on the rear side of the movable face (18) and integrally rotating with the movable face (18) and a weight roller (23) interposed between the movable face (18) and the movable drive plate (22);
the movable face (18) is configured to cause a distance between the V-shaped groove to widen or narrow by being moved in the axial direction of the crankshaft to thereby change the effective diameter of the drive pulley (6) and the contact diameter with the V-belt;
the idler pulley (8) includes a movable face (25) movable in the axial direction of the drive shaft (11), a fixed face (26) fixed to the drive shaft (11), and a spring (27) urging the movable face so as to approach the fixed face (26);
the movable face (25) of the idler pulley (8) is configured to cause a distance between the V-shaped groove to widen or narrow by being moved in the axial direction of the drive shaft to thereby change an effective diameter of the drive pulley (6) or a contact diameter to the V-belt, and
wherein when the crankshaft (5) is rotated at a high speed, a centrifugal force is generated on the weight roller (23) by which the movable face (18) approaches the fixed face (19) of the drive pulley (6) to thereby widen an effective diameter of the V-belt wrapped around the drive pulley and a contact diameter thereof, and when the crankshaft is rotated at a low speed, a centrifugal force caused to the weight roller (23) is reduced by which the movable face is separated from the fixed face (19) of the drive pulley (6) to thereby make narrow the effective diameter of the V-belt wound up around the drive pulley (6) and the contact diameter thereof, and the movable face of the idler pulley (8) approaches the fixed face thereof by the spring (27) to thereby widen the effective diameter of the V-belt wound up around the idler pulley (8) and the contact diameter thereof,
**characterized in that** the abnormality determining device (1A) belt-type comprises:
an engine speed sensor (31) configured to detect a rotation speed of the engine (3);
a pressure sensor (38) configured to detect an intake pressure of the engine (3); and
a determining section (35A) configured to determine whether or not the belt-type continuously variable transmission is abnormal based on a magnitude of a change in the rotation speed of the engine (3) relative to the intake pressure of the engine (3) detected by the pressure sensor (38) and to determine that an abnormality occurs in a case when the rotation speed of the engine is large relative to a predetermined range of the intake pressure.

4. The belt-type continuously variable transmission according to claim 3, wherein the determining section determines the belt-type continuously variable transmission to be abnormal when the rotation speed of the engine is included in a predetermined abnormality determination range (Fb) preliminarily set for each level of the intake pressure, and determines the belt-type continuously variable transmission to be normal when the rotation speed of the engine is not included in the abnormality determination range.

5. A belt-type continuously variable transmission having an abnormality determining device (1B), the belt-type continuously variable transmission including a drive pulley provided on a crankshaft of an engine, an idler pulley connected to an axle shaft, and a V-belt (9) wrapped around the drive pulley and the idler pulley, in which:
the drive pulley (6) includes a movable face (18) movable in an axial direction of the crankshaft (5), a fixed face (19) fixed to the crankshaft (5), and a drive mechanism (21) that causes the movable face and the fixed face, which define a V-shaped groove therebetween, to approach and separate from each other;
the drive mechanism (21) includes a movable drive plate (22) disposed on the rear side of the movable face (18) and integrally rotating with the movable face (18) and a weight roller (23) interposed between the movable face (18) and the movable drive plate (22);
the movable face (18) is configured to cause a distance between the V-shaped groove to widen or narrow by being moved in the axial direction of the crankshaft to thereby change the effective diameter of the drive pulley (6) and the contact diameter with the V-belt;
the idler pulley (8) includes a movable face (25) movable in the axial direction of the drive shaft (11), a fixed face (26) fixed to the drive shaft (11), and a spring (27) urging the movable face so as to approach the fixed face (26);
the movable face (25) of the idler pulley (8) is configured to cause a distance between the V-shaped groove to widen or narrow by being moved in the axial direction of the drive shaft to thereby change an effective diameter of the drive pulley (6) or a contact diameter to the V-belt, and
wherein when the crankshaft (5) is rotated at a high speed, a centrifugal force is generated on the weight roller (23) by which the movable face (18) approaches the fixed face (19) of the drive pulley (6) to thereby widen an effective diameter of the V-belt wrapped around the drive pulley and a contact diameter thereof, and when the crankshaft is rotated at a low speed, a centrifugal force caused to the weight roller (23) is reduced by which the movable face is separated from the fixed face (19) of the drive pulley (6) to thereby make narrow the effective diameter of the V-belt wound up around the drive pulley (6) and the contact diameter thereof, and the movable face of the idler pulley (8) approaches the fixed face thereof by the spring (27) to thereby widen the effective diameter of the V-belt wound up around the idler pulley (8) and the contact diameter thereof,
**characterized in that** the abnormality determining device (1B) comprises:
an engine speed sensor (31) configured to detect a rotation speed of the engine (3);
a throttle valve opening sensor (33) configured to detect an opening degree of a throttle valve (32) that adjusts an air intake of the engine (3);
a pressure sensor (38) configured to detect an intake pressure of the engine (3); and
a determining section (35B) configured to determine whether or not the belt-type continuously variable transmission is abnormal based on a magnitude of a change in the rotation speed of the engine (3) relative to the opening degree of the throttle valve and a magnitude of a change in the rotation speed of the engine relative to the intake pressure detected by the pressure sensor.

6. The belt-type continuously variable transmission according to claim 5, wherein the determining section determines the belt-type continuously variable transmission to be abnormal when the rotation speed of the engine is included in a predetermined abnormality determination range preliminarily set for each level of the opening degree of the throttle valve, and the rotation speed of the engine is included in a predetermined abnormality determination range preliminarily set for each level of the intake pressure, and determines the belt-type continuously variable transmission to be normal in other cases.

7. A belt-type continuously variable transmission having an abnormality determining device (1C), the belt-type continuously variable transmission including a drive pulley provided on a crankshaft of an engine, an idler pulley connected to an axle shaft, and a (V-belt (9) wrapped around the drive pulley and the idler pulley, in which:
the drive pulley (6) includes a movable face (18) movable in an axial direction of the crankshaft (5), a fixed face (19) fixed to the crankshaft (5), and a drive mechanism (21) that causes the movable face and the fixed face, which define a V-shaped groove therebetween, to approach and separate from each other;
the drive mechanism (21) includes a movable drive plate (22) disposed on the rear side of the movable face (18) and integrally rotating with the movable face (18) and a weight roller (23) interposed between the movable face (18) and the movable drive plate (22);
the movable face (18) is configured to cause a distance between the V-shaped groove to widen or narrow by being moved in the axial direction of the crankshaft to thereby change the effective diameter of the drive pulley (6) and the contact diameter with the V-belt;
the idler pulley (8) includes a movable face (25) movable in the axial direction of the drive shaft (11), a fixed face (26) fixed to the drive shaft (11), and a spring (27) urging the movable face so as to approach the fixed face (26);
the movable face (25) of the idler pulley (8) is configured to cause a distance between the V-shaped groove to widen or narrow by being moved in the axial direction of the drive shaft to thereby change an effective diameter of the drive pulley (6) or a contact diameter to the V-belt, and
wherein when the crankshaft (5) is rotated at a high speed, a centrifugal force is generated on the weight roller (23) by which the movable face (18) approaches the fixed face (19) of the drive pulley (6) to thereby widen an effective diameter of the V-belt wrapped around the drive pulley and a contact diameter thereof, and when the crankshaft is rotated at a low speed, a centrifugal force caused to the weight roller (23) is reduced by which the movable face is separated from the fixed face (19) of the drive pulley (6) to thereby make narrow the effective diameter of the V-belt wound up around the drive pulley (6) and the contact diameter thereof, and the movable face of the idler pulley (8) approaches the fixed face thereof by the spring (27) to thereby widen the effective diameter of the V-belt wound up around the idler pulley (8) and the contact diameter thereof,
**characterized in that** the abnormality determining device (1C) comprises:
an engine speed sensor (31) configured to detect a rotation speed of the engine (3);
an axle shaft speed sensor (41) configured to detect a rotation speed of the axle shaft (7);
a comparison vehicle speed calculating section (42) configured to calculate a vehicle speed at a predetermined engine rotation speed as a comparison reference based on a ratio of the rotation speed of the engine and the rotation speed of the axle shaft (7); and
a determining section (35C) configured to determine whether or not the belt-type continuously variable transmission is abnormal based on the vehicle speed calculated by the comparison vehicle speed calculating section (42) and an actual vehicle speed and to determine that an abnormality occurs in a case when the actual vehicle speed is smaller relative to the vehicle speed of the comparison reference in a vehicle high speed area.

8. The belt-type continuously variable transmission according to claim 7, wherein the determining section determines the belt-type continuously variable transmission to be abnormal when the vehicle speed calculated by the comparison vehicle speed calculating section is included in a preliminarily-set predetermined abnormality determination range, and determines the belt-type continuously variable transmission to be normal when the vehicle speed calculated by the comparison vehicle speed calculating section is not included in the abnormality determination range.

9. The belt-type continuously variable transmission according to any one of claims 1 to 8, further comprising a warning section that issues a warning when the belt-type continuously variable transmission is continuously determined to be abnormal for a period longer than a preliminarily-set predetermined failure determination time period.

## Patentansprüche

1. Stufenloses Getriebe mit Keilriemen, das eine Abnormalitätsbestimmungseinrichtung (1) aufweist, enthaltend eine Antriebskegelscheibe, die auf einer Kurbelwelle eines Motors angeordnet ist, eine Leerlaufkegelscheibe, die mit einer Achswelle verbunden ist, und einen um die Antriebskegelscheibe und die Leerlaufkegelscheibe geschlungenen Keilriemen (9), wobei
die Antriebsriemenscheibe (6) eine in axialer Richtung der Kurbelwelle (5) bewegliche Seite (18), eine an der Kurbelwelle (5) festgelegte feststehende Seite (19) und einen Antriebsmechanismus (21) aufweist, der die bewegliche Seite und die feststehende Seite, die zwischen sich eine groß V-förmige Nut bilden, dazu bringt, einander anzunähern oder sich voneinander zu trennen;
der Antriebsmechanismus (21) eine bewegliche Antriebsplatte (22) enthält, die sich auf der Rückseite der beweglichen Seite (18) befindet und im Verein mit der beweglichen Seite (18) dreht, und eine zwischen der beweglichen Seite (18) und der beweglichen Antriebsseite (22) angeordnete Gewichtsrolle (23);
die bewegliche Seite (18) konfiguriert ist, um einen Abstand zwischen der V-förmigen Nut zu veranlassen, sich zu erweitern oder zu verschmälern, indem sie in der axialen Richtung der Kurbelwelle bewegt wird, um dadurch den effektiven Durchmesser der Antriebskegelscheibe (6) und den Kontaktdurchmesser mit dem Keilriemen zu ändern;
die Leerlaufkegelscheibe (8) eine bewegliche Seite (25), die in axialer Richtung der Antriebswelle (11) beweglich ist, und eine feststehende Seite (26), die an der Antriebswelle (11) festgelegt ist, und eine die bewegliche Seite in Richtung einerAnnäherung an die feststehende Seite (26) drängende Feder (27) enthält;
die bewegliche Seite (25) der Leerlaufkegelscheibe konfiguriert ist, um zu veranlassen, dass ein Abstand zwischen der V-förmigen Nut sich erweitert oder verschmälert, indem sie in axialer Richtung der Antriebswelle bewegt wird, um dadurch einen effektiven Durchmesser der Antriebskegelscheibe (6) oder einen Kontaktdurchmesser des Keilriemens zu ändern, und
wobei dann, wenn die Kurbelwelle (5) mit hoher Drehzahl dreht, auf die Gewichtsrolle (23) eine Zentrifugalkraft ausgeübt wird, wodurch die bewegliche Seite (18) sich der feststehenden Seite (19) der Antriebskegelscheibe (6) nähert, um dadurch einen effektiven Durchmesser des um die Antriebskegelscheibe geschlungenen Keilriemens und einen Kontaktdurchmesser desselben zu erweitern, und wenn die Kurbelwelle mit geringer Drehzahl dreht, eine durch die Gewichtsrolle (23) hervorgerufene Zentrifugalkraft reduziert wird, wodurch die bewegliche Seite von der feststehenden Seite (19) der Antriebskegelscheibe (6) abrückt, um dadurch den effektiven Durchmesser des um die Antriebskegelscheibe (6) geschlungenen Keilriemens und dessen Kontaktdurchmesser zu verkleinern, und die bewegliche Seite der Leerlaufkegelscheibe (8) sich deren feststehender Seite aufgrund der Feder (27) annähert, um dadurch den effektiven Durchmesser des um die Leerlaufkegelscheibe (8) geschlungenen Keilriemens und dessen Kontaktdurchmesser zu erweitern,
**dadurch gekennzeichnet, dass** die Abnormalitätsbestimmungseinrichtung (1) aufweist:
ein Motordrehzahlsensor (31), konfiguriert zum Erfassen einer Drehzahl des Motors (3);
einen Drosselklappenöffnungssensor (33), konfiguriert zum Erfassen eines Öffnungsgrads einer Drosselklappe (32), die einen Lufteinlass des Motors (3) einstellt; und
einen Bestimmungsabschnitt (35), konfiguriert zum Bestimmen, ob das stufenlose Getriebe mit Keilriemen abnormal ist oder nicht, basierend auf einem Betrag einer Änderung in der Drehzahl des Motors (3) in Bezug auf den Öffnungsgrad der Drosselklappe (32), und zum Feststellen, dass eine Abnormalität dann auftritt, wenn die Drehzahl des Motors (3) in Bezug auf den Öffnungsgrad der Drosselklappe bei einem geringen Maß der Öffnungsfläche der Drosselklappe groß ist.

2. Stufenloses Getriebe nach Anspruch 1, bei dem der Bestimmungsabschnitt (35) bestimmt, dass das stufenlose Getriebe abnormal ist, wenn die Drehzahl des Motors (3) in einem vorbestimmten Abnormalitätsbestimmungsbereich (Fa) enthalten ist, der zuvor für jede Stufe des Öffnungsgrads der Drosselklappe eingestellt wurde, und feststellt, dass das stufenlose Getriebe normal ist, wenn die Drehzahl des Motors (3) nicht in dem Abnormalitätsbestimmungsbereich enthalten ist.

3. Stufenloses Getriebe mit Keilriemen, das eine Abnormalitätsbestimmungseinrichtung (1A) aufweist, wobei das stufenlose Getriebe eine Antriebskegelscheibe, die auf einer Kurbelwelle eines Motors angeordnet ist, eine Leerlaufkegelscheibe, die mit einer Achswelle verbunden ist, und einen um die Antriebskegelscheibe und die Leerlaufkegelscheibe geschlungenen Keilriemen (9), wobei
die Antriebsriemenscheibe (6) eine in axialer Richtung der Kurbelwelle (5) bewegliche Seite (18), eine an der Kurbelwelle (5) festgelegte feststehende Seite (19) und einen Antriebsmechanismus (21) aufweist, der die bewegliche Seite und die feststehende Seite, die zwischen sich eine groß V-förmige Nut bilden, dazu bringt, einander anzunähern oder sich voneinander zu trennen;
der Antriebsmechanismus (21) eine bewegliche Antriebsplatte (22) enthält, die sich auf der Rückseite der beweglichen Seite (18) befindet und im Verein mit der beweglichen Seite (18) dreht, und eine zwischen der beweglichen Seite (18) und der beweglichen Antriebsseite (22) angeordnete Gewichtsrolle (23);
die bewegliche Seite (18) konfiguriert ist, um einen Abstand zwischen der V-förmigen Nut zu veranlassen, sich zu erweitern oder zu verschmälern, indem sie in der axialen Richtung der Kurbelwelle bewegt wird, um dadurch den effektiven Durchmesser der Antriebskegelscheibe (6) und den Kontaktdurchmesser mit dem Keilriemen zu ändern;
die Leerlaufkegelscheibe (8) eine bewegliche Seite (25), die in axialer Richtung derAntriebswelle (11) beweglich ist, und eine feststehende Seite (26), die an der Antriebswelle (11) festgelegt ist, und eine die bewegliche Seite in Richtung einer Annäherung an die feststehende Seite (26) drängende Feder (27) enthält;
die bewegliche Seite (25) der Leerlaufkegelscheibe konfiguriert ist, um zu veranlassen, dass ein Abstand zwischen der V-förmigen Nut sich erweitert oder verschmälert, indem sie in axialer Richtung der Antriebswelle bewegt wird, um dadurch einen effektiven Durchmesser der Antriebskegelscheibe (6) oder einen Kontaktdurchmesser des Keilriemens zu ändern, und
wobei dann, wenn die Kurbelwelle (5) mit hoher Drehzahl dreht, auf die Gewichtsrolle (23) eine Zentrifugalkraft ausgeübt wird, wodurch die bewegliche Seite (18) sich der feststehenden Seite (19) der Antriebskegelscheibe (6) nähert, um dadurch einen effektiven Durchmesser des um die Antriebskegelscheibe geschlungenen Keilriemens und einen Kontaktdurchmesser desselben zu erweitern, und wenn die Kurbelwelle mit geringer Drehzahl dreht, eine durch die Gewichtsrolle (23) hervorgerufene Zentrifugalkraft reduziert wird, wodurch die bewegliche Seite von der feststehenden Seite (19) der Antriebskegelscheibe (6) abrückt, um dadurch den effektiven Durchmesser des um die Antriebskegelscheibe (6) geschlungenen Keilriemens und dessen Kontaktdurchmesser zu verkleinern, und die bewegliche Seite der Leerlaufkegelscheibe (8) sich deren feststehender Seite aufgrund der Feder (27) annähert, um dadurch den effektiven Durchmesser des um die Leerlaufkegelscheibe (8) geschlungenen Keilriemens und dessen Kontaktdurchmesser zu erweitern,
**dadurch gekennzeichnet, dass** die Abnormalitätsbestimmungseinrichtung (1A) aufweist:
einen Motordrehzahlsensor (39), konfiguriert zum Ermitteln einer Drehzahl des Motors (3);
einen Drucksensor (38), konfiguriert zum Erfassen eines Einlaßdrucks des Motors (3); und
einen Bestimmungsabschnitt (35A), konfiguriert zum Bestimmen, ob das stufenlose Getriebe mit Keilriemen abnormal ist oder nicht, basierend auf einem Betrag einer Änderung in der Drehzahl des Motors (3), bezogen auf den Einlaßdruck des Motors (3), wie er von dem Drucksensor (38) erfasst wird, und zum Bestimmen, dass eine Abnormalität auftritt, falls die Drehzahl des Motors relativ groß ist in Bezug auf einen vorbestimmten Bereich des Einlaßdrucks.

4. Stufenloses Getriebe nach Anspruch 3, bei dem der Bestimmungsabschnitt bestimmt, dass das stufenlose Getriebe abnormal ist, wenn die Drehzahl des Motors in einem vorbestimmten Abnormalitätsbestimmungsbereich (Fb) enthalten ist, welcher vorab für jede Stufe des Einlaßdrucks eingestellt wurde, und feststellt, dass das stufenlose Getriebe normal ist, wenn die Drehzahl des Motors nicht in dem Abnormalitätsbestimmungsbereich enthalten ist.

5. Stufenloses Getriebe mit Keilriemen, das eine Abnormalitätsbestimmungseinrichtung (1 B) aufweist, enthaltend eine Antriebskegelscheibe, die auf einer Kurbelwelle eines Motors angeordnet ist, eine Leerlaufkegelscheibe, die mit einer Achswelle verbunden ist, und einen um die Antriebskegelscheibe und die Leerlaufkegelscheibe geschlungenen Keilriemen (9), wobei
die Antriebsriemenscheibe (6) eine in axialer Richtung der Kurbelwelle (5) bewegliche Seite (18), eine an der Kurbelwelle (5) festgelegte feststehende Seite (19) und einen Antriebsmechanismus (21) aufweist, der die bewegliche Seite und die feststehende Seite, die zwischen sich eine groß V-förmige Nut bilden, dazu bringt, einander anzunähern oder sich voneinander zu trennen;
der Antriebsmechanismus (21) eine bewegliche Antriebsplatte (22) enthält, die sich auf der Rückseite der beweglichen Seite (18) befindet und im Verein mit der beweglichen Seite (18) dreht, und eine zwischen der beweglichen Seite (18) und der beweglichen Antriebsseite (22) angeordnete Gewichtsrolle (23);
die bewegliche Seite (18) konfiguriert ist, um einen Abstand zwischen der V-förmigen Nut zu veranlassen, sich zu erweitern oder zu verschmälern, indem sie in der axialen Richtung der Kurbelwelle bewegt wird, um dadurch den effektiven Durchmesser der Antriebskegelscheibe (6) und den Kontaktdurchmesser mit dem Keilriemen zu ändern;
die Leerlaufkegelscheibe (8) eine bewegliche Seite (25), die in axialer Richtung der Abtriebswelle (11) beweglich ist, und eine feststehende Seite (26), die an der Antriebswelle (11) festgelegt ist, und eine die bewegliche Seite in Richtung einer Annäherung an die feststehende Seite (26) drängende Feder (27) enthält;
die bewegliche Seite (25) der Leerlaufkegelscheibe konfiguriert ist, um zu veranlassen, dass ein Abstand zwischen der V-förmigen Nut sich erweitert oder verschmälert, indem sie in axialer Richtung der Antriebswelle bewegt wird, um dadurch einen effektiven Durchmesser der Antriebskegelscheibe (6) oder einen Kontaktdurchmesser des Keilriemens zu ändern, und
wobei dann, wenn die Kurbelwelle (5) mit hoher Drehzahl dreht, auf die Gewichtsrolle (23) eine Zentrifugalkraft ausgeübt wird, wodurch die bewegliche Seite (18) sich der feststehenden Seite (19) der Antriebskegelscheibe (6) nähert, um dadurch einen effektiven Durchmesser des um die Antriebskegelscheibe geschlungenen Keilriemens und einen Kontaktdurchmesser desselben zu erweitern, und wenn die Kurbelwelle mit geringer Drehzahl dreht, eine durch die Gewichtsrolle (23) hervorgerufene Zentrifugalkraft reduziert wird, wodurch die bewegliche Seite von der feststehenden Seite (19) der Antriebskegelscheibe (6) abrückt, um dadurch den effektiven Durchmesser des um die Antriebskegelscheibe (6) geschlungenen Keilriemens und dessen Kontaktdurchmesser zu verkleinern, und die bewegliche Seite der Leerlaufkegelscheibe (8) sich deren feststehender Seite aufgrund der Feder (27) annähert, um dadurch den effektiven Durchmesser des um die Leerlaufkegelscheibe (8) geschlungenen Keilriemens und dessen Kontaktdurchmesser zu erweitern,
**dadurch gekennzeichnet, dass** die Abnormalitätsbestimmungseinrichtung (1 B) aufweist:
ein Motordrehzahlsensor (31), konfiguriert zum Erfassen einer Drehzahl des Motors (3);
einen Drosselklappenöffnungssensor (33), konfiguriert zum Erfassen eines Öffnungsgrads einer Drosselklappe (32), die einen Lufteinlass des Motors (3) einstellt;
einen Drucksensor (38) konfiguriert zum Erfassen eines Einlaßdrucks des Motors (3); und
einen Bestimmungsabschnitt (35B), konfiguriert zum Bestimmen, ob das stufenlose Getriebe mit Keilriemen abnormal ist oder nicht, basierend auf einem Betrag einer Änderung der Drehzahl des Motors (3) relativ zu dem Öffnungsgrad der Drosselklappe und einem Betrag einer Änderung in der Drehzahl des Motors relativ zu dem von dem Drucksensor erfassten Einlaßdruck.

6. Stufenloses Getriebe nach Anspruch 5, bei dem der Bestimmungsabschnitt eine Abnormalität des stufenlosen Getriebes feststellt, wenn die Drehzahl des Motors in einem vorbestimmten Abnormalitätsbestimmungsbereich enthalten ist, der zuvor für jede Stufe des Öffnungsgrads der Drosselklappe eingestellt wurde, und die Drehzahl des Motors in einem vorbestimmten Abnormalitätsbestimmungsbereich enthalten ist, der zuvor für jede Stufe des Einlaßdrucks bestimmt wurde, und in anderen Fällen feststellt, dass das stufenlose Getriebe normal arbeitet.

7. Stufenloses Getriebe mit Keilriemen, das eine Abnormalitätsbestimmungseinrichtung (1C) aufweist, enthaltend eine Antriebskegelscheibe, die auf einer Kurbelwelle eines Motors angeordnet ist, eine Leerlaufkegelscheibe, die mit einer Achswelle verbunden ist, und einen um die Antriebskegelscheibe und die Leerlaufkegelscheibe geschlungenen Keilriemen (9), wobei
die Antriebsriemenscheibe (6) eine in axialer Richtung der Kurbelwelle (5) bewegliche Seite (18), eine an der Kurbelwelle (5) festgelegte feststehende Seite (19) und einen Antriebsmechanismus (21) aufweist, der die bewegliche Seite und die feststehende Seite, die zwischen sich eine groß V-förmige Nut bilden, dazu bringt, einander anzunähern oder sich voneinander zu trennen;
der Antriebsmechanismus (21) eine bewegliche Antriebsplatte (22) enthält, die sich auf der Rückseite der beweglichen Seite (18) befindet und im Verein mit der beweglichen Seite (18) dreht, und eine zwischen der beweglichen Seite (18) und der beweglichen Antriebsseite (22) angeordnete Gewichtsrolle (23);
die bewegliche Seite (18) konfiguriert ist, um einen Abstand zwischen der V-förmigen Nut zu veranlassen, sich zu erweitern oder zu verschmälern, indem sie in der axialen Richtung der Kurbelwelle bewegt wird, um dadurch den effektiven Durchmesser der Antriebskegelscheibe (6) und den Kontaktdurchmesser mit dem Keilriemen zu ändern;
die Leerlaufkegelscheibe (8) eine bewegliche Seite (25), die in axialer Richtung der Antriebswelle (11) beweglich ist, und eine feststehende Seite (26), die an der Antriebswelle (11) festgelegt ist, und eine die bewegliche Seite in Richtung einerAnnäherung an die feststehende Seite (26) drängende Feder (27) enthält;
die bewegliche Seite (25) der Leerlaufkegelscheibe konfiguriert ist, um zu veranlassen, dass ein Abstand zwischen der V-förmigen Nut sich erweitert oder verschmälert, indem sie in axialer Richtung der Antriebswelle bewegt wird, um dadurch einen effektiven Durchmesser der Antriebskegelscheibe (6) oder einen Kontaktdurchmesser des Keilriemens zu ändern, und
wobei dann, wenn die Kurbelwelle (5) mit hoher Drehzahl dreht, auf die Gewichtsrolle (23) eine Zentrifugalkraft ausgeübt wird, wodurch die bewegliche Seite (18) sich der feststehenden Seite (19) der Antriebskegelscheibe (6) nähert, um dadurch einen effektiven Durchmesser des um die Antriebskegelscheibe geschlungenen Keilriemens und einen Kontaktdurchmesser desselben zu erweitern, und wenn die Kurbelwelle mit geringer Drehzahl dreht, eine durch die Gewichtsrolle (23) hervorgerufene Zentrifugalkraft reduziert wird, wodurch die bewegliche Seite von der feststehenden Seite (19) der Antriebskegelscheibe (6) abrückt, um dadurch den effektiven Durchmesser des um die Antriebskegelscheibe (6) geschlungenen Keilriemens und dessen Kontaktdurchmesser zu verkleinern, und die bewegliche Seite der Leerlaufkegelscheibe (8) sich deren feststehender Seite aufgrund der Feder (27) annähert, um dadurch den effektiven Durchmesser des um die Leerlaufkegelscheibe (8) geschlungenen Keilriemens und dessen Kontaktdurchmesser zu erweitern,
**dadurch gekennzeichnet, dass** die Abnormalitätsbestimmungseinrichtung (1C) aufweist:
einen Motordrehzahlsensor (31), konfiguriert zum Erfassen einer Drehzahl des Motors (3);
einen Achswellendrehzahlsensor (41), konfiguriert zum Erfassen einer Drehzahl der Achswelle (7);
einen Vergleichs-Fahrzeuggeschwindigkeits-Berechnungsabschnitt (42), konfiguriert zum Berechnen einer Fahrzeuggeschwindigkeit bei einer vorbestimmten Motordrehzahl als Vergleichsreferenz basierend auf einem Verhältnis der Drehzahl des Motors und der Drehzahl der Achswelle (7); und
einen Bestimmungsabschnitt (35C), konfiguriert zum Bestimmen, ob das stufenlose Getriebe abnormal ist oder nicht, basierend auf der von dem Vergleichs-Fahrzeuggeschwindigkeits-Berechnungsabschnitt (42) berechneten Fahrzeuggeschwindigkeit und einer aktuellen Fahrzeuggeschwindigkeit, und zum Bestimmen, dass eine Abnormalität auftritt, wenn die aktuelle Fahrzeuggeschwindigkeit relativ zu der Fahrzeuggeschwindigkeit der Vergleichsreferenz in einem hohen Fahrzeuggeschwindigkeitsbereich kleiner ist.

8. Stufenloses Getriebe nach Anspruch 7, bei dem der Bestimmungsabschnitt feststellt, dass das stufenlose Getriebe abnormal ist, wenn die von dem Vergleichs-Fahrzeuggeschwindigkeits-Berechnungsabschnitt berechnete Fahrzeuggeschwindigkeit in einem zuvor eingerichteten vorbestimmten Abnormalitäts-Bestimmungsbereich enthalten ist und feststellt, dass das stufenlose Getriebe normal ist, wenn die von dem Vergleichs-Fahrzeuggeschwindigkeits-Berechnungsabschnitt berechnete Fahrzeuggeschwindigkeit nicht in dem Abnormalitätsbestimmungsbereich enthalten ist.

9. Stufenloses Getriebe nach einem der Ansprüche 1 bis 8, weiterhin enthaltend einen Warnabschnitt, der eine Warnung ausgibt, wenn das stufenlose Getriebe kontinuierlich über eine Zeitspanne länger als eine vorab eingestellte vorbestimmte Ausfallbestimmungszeitspanne ermittelt wird.

## Revendications

1. Transmission à variation continue de type à courroie présentant un dispositif de détermination d'anormalité (1), la transmission à variation continue de type à courroie incluant une poulie d'entraînement prévue sur un vilebrequin d'un moteur, une poulie de tension raccordée à un arbre de roue, et une courroie trapézoïdale (9) enroulée autour de la poulie d'entraînement et de la poulie de tension, dans laquelle :
la poulie d'entraînement (6) inclut une face mobile (18) pouvant être déplacée dans une direction axiale du vilebrequin (5), une face fixe (19) fixée sur le vilebrequin (5) et un mécanisme d'entraînement (21) qui amène la face mobile et la face fixe, lesquelles définissent entre elles une gorge trapézoïdale, à se rapprocher et se séparer l'une de l'autre ;
le mécanisme d'entraînement (21) inclut une plaque d'entraînement mobile (22) disposée sur le côté arrière de la face mobile (18) et tournant intégralement avec la face mobile (18) et un rouleau de poids (23) intercalé entre la face mobile (18) et la plaque d'entraînement mobile (22) ;
la face mobile (18) est configurée pour amener une distance entre la gorge de forme trapézoïdale à s'élargir ou rétrécir par son déplacement dans la direction axiale du vilebrequin afin de modifier ainsi le diamètre effectif de la poulie d'entraînement (6) et le diamètre de contact avec la courroie trapézoïdale ;
la poulie de tension (8) inclut une face mobile (25) pouvant être déplacée, dans la direction axiale de l'arbre de transmission (11), une face fixe (26) fixée sur le l'arbre de transmission (11) et un ressort (27) poussant la face mobile à se rapprocher de la face fixe (26) ;
la face mobile (25) de la poulie de tension (8) est configurée pour amener une distance entre la gorge de forme trapézoïdale à s'élargir ou rétrécir par son déplacement dans la direction axiale de l'arbre de transmission afin de modifier ainsi un diamètre effectif de la poulie d'entraînement (6) ou un diamètre de contact avec la courroie trapézoïdale, et
dans laquelle le vilebrequin (5) est entraîné en rotation à une grande vitesse, une force centrifuge est générée sur le rouleau de poids (23) par laquelle la face mobile (18) se rapproche de la face fixe (19) de la poulie d'entraînement (6) afin ainsi d'élargir un diamètre effectif de la courroie trapézoïdale entourée autour de la poulie d'entraînement et un diamètre de contact avec celle-ci, et lorsque le vilebrequin est entraîné en rotation à petite vitesse, une force centrifuge exercée sur le rouleau de poids (23) est réduite, par laquelle la face mobile est séparée de la face fixe (19) de la poulie d'entraînement (6), afin ainsi de rétrécir le diamètre effectif de la courroie trapézoïdale enroulée autour de la poulie d'entraînement (6) et le diamètre de contact avec celle-ci, et la face mobile de la poulie de tension (8) se rapproche de la face fixe de celle-ci par le ressort (27), afin ainsi d'élargir le diamètre effectif de la courroie trapézoïdale enroulée autour de la poulie de tension (8) et le diamètre de contact avec celle-ci,
**caractérisée en ce que** le dispositif de détermination d'anormalité (1) comprend :
un capteur de vitesse de moteur (31) configuré pour détecter une vitesse de rotation du moteur (3) ;
un capteur d'ouverture de papillon des gaz (33) configuré pour détecter un degré d'ouverture d'un papillon des gaz (32) qui ajuste une admission d'air du moteur (3), et
une section de détermination (35) configurée pour déterminer si oui ou non la transmission à variation continue de type à courroie est anormale sur la base d'une ampleur d'une modification dans la vitesse de rotation du moteur (3) par rapport au degré d'ouverture du papillon des gaz (32), et pour déterminer qu'une anormalité se produit dans un cas où la vitesse de rotation du moteur (3) est grande par rapport au degré d'ouverture du papillon des gaz dans un faible degré de zone d'ouverture du papillon des gaz.

2. Transmission à variation continue de type à courroie selon la revendication 1, dans laquelle la section de détermination (35) détermine que la transmission à variation continue de type à courroie est anormale lorsque la vitesse de rotation du moteur (3) est incluse dans une plage de détermination d'anormalité prédéterminée (Fa) fixée au préalable pour chaque niveau du degré d'ouverture du papillon des gaz, et détermine que la transmission à variation continue de type à courroie est normale lorsque la vitesse de rotation du moteur (3) n'est pas incluse dans la plage de détermination d'anormalité.

3. Transmission à variation continue de type à courroie présentant un dispositif de détermination d'anormalité (1A), la transmission à variation continue de type à courroie incluant une poulie d'entraînement prévue sur un vilebrequin d'un moteur, une poulie de tension raccordée à un arbre de roué, et une courroie trapézoïdale (9) enroulée autour de la poulie d'entraînement et de la poulie de tension, dans laquelle :
la poulie d'entraînement (6) inclut une face mobile (18) pouvant être déplacée dans une direction axiale du vilebrequin (5), une face fixe (19) fixée sur le vilebrequin (5), et un mécanisme d'entraînement (21) qui amène la face mobile et la face fixe, lesquelles définissent entre elles une gorge trapézoïdale, à se rapprocher et se séparer l'une de l'autre ;
le mécanisme d'entraînement (21) inclut une plaque d'entraînement mobile (22) disposée sur le côté arrière de la face mobile (18) et tournant intégralement avec la face mobile (18) et un rouleau de poids (23) intercalé entre la face mobile (18) et la plaque d'entraînement mobile (22) ;
la face mobile (18) est configurée pour amener une distance entre la gorge de forme trapézoïdale à s'élargir ou rétrécir par son déplacement dans la direction axiale du vilebrequin afin de modifier ainsi le diamètre effectif de la poulie d'entraînement (6) et le diamètre de contact avec la courroie trapézoïdale ;
la poulie de tension (8) inclut une face mobile (25) pouvant être déplacée dans la direction axiale de l'arbre de transmission (11), une face fixe (26) fixée sur l'arbre de transmission (11) et un ressort (27) poussant la face mobile à se rapprocher de la face fixe (26) ;
la face mobile (25) de la poulie de tension (8) est configurée pour amener une distance entre la gorge de forme trapézoïdale à s'élargir ou rétrécir par son déplacement dans la direction axiale de l'arbre de transmission afin de modifier ainsi un diamètre effectif de la poulie d'entraînement (6) ou un diamètre de contact avec la courroie trapézoïdale, et
dans laquelle le vilebrequin (5) est entraîné en rotation à une grande vitesse, une force centrifuge est générée sur le rouleau de poids (23) par laquelle la face mobile (18) se rapproche de la face fixe (19) de la poulie d'entraînement (6) afin ainsi d'élargir un diamètre effectif de la courroie trapézoïdale entourée autour de la poulie d'entraînement et un diamètre de contact avec celle-ci, et lorsque le vilebrequin est entraîné en rotation à petite vitesse, une force centrifuge exercée sur le rouleau de poids (23) est réduite, par laquelle la face mobile est séparée de la face fixe (19) de la poulie d'entraînement (6), afin ainsi de rétrécir le diamètre effectif de la courroie trapézoïdale enroulée autour de la poulie d'entraînement (6) et le diamètre de contact avec celle-ci, et la face mobile de la poulie de tension (8) se rapproche de la face fixe de celle-ci par le ressort (27), afin ainsi d'élargir le diamètre effectif de la courroie trapézoïdale enroulée autour de la poulie de tension (8) et le diamètre de contact avec celle-ci,
**caractérisée en ce que** le dispositif de détermination d'anormalité (1A), comprend :
un capteur de vitesse de moteur (31) configuré pour détecter une vitesse de rotation du moteur (3) ;
un capteur de pression (38) configuré pour détecter une pression d'admission du moteur (3), et
une section de détermination (35A) configurée pour déterminer si oui ou non la transmission à variation continue de type à courroie est anormale sur la base d'une ampleur d'une modification dans la vitesse de rotation du moteur (3) par rapport à la pression d'admission du moteur (3) détectée par le capteur de pression (38), et pour déterminer qu'une anormalité se produit dans un cas où la vitesse de rotation du moteur est grande par rapport à une plage prédéterminée de la pression d'admission.

4. Transmission à variation continue de type à courroie selon la revendication 3, dans laquelle la section de détermination détermine que la transmission à variation continue de type à courroie est anormale lorsque la vitesse de rotation du moteur est incluse dans une plage de détermination d'anormalité prédéterminée (Fb) fixée au préalable pour chaque niveau de la pression d'admission, et détermine que la transmission à variation continue de type à courroie est normale lorsque la vitesse de rotation du moteur n'est pas incluse dans la plage de détermination d'anormalité.

5. Transmission à variation continue de type à courroie présentant un dispositif de détermination d'anormalité (1B), la transmission à variation continue de type à courroie incluant une poulie d'entraînement prévue sur un vilebrequin d'un moteur, une poulie de tension raccordée à un arbre de roue, et une courroie trapézoïdale (9) enroulée autour de la poulie d'entraînement et de la poulie de tension, dans laquelle :
la poulie d'entraînement (6) inclut une face mobile (18) pouvant être déplacée dans une direction axiale du vilebrequin (5), une face fixe (19) fixée sur le vilebrequin (5), et un mécanisme d'entraînement (21) qui amène la face mobile et la face fixe, lesquelles définissent entre elles une gorge trapézoïdale, à se rapprocher et se séparer l'une de l'autre ;
le mécanisme d'entraînement (21) inclut une plaque d'entraînement mobile (22) disposée sur le côté arrière de la face mobile (18) et tournant intégralement avec la face mobile (18) et un rouleau de poids (23) intercalé entre la face mobile (18) et la plaque d'entraînement mobile (22) ;
la face mobile (18) est configurée pour amener une distance entre la gorge de forme trapézoïdale à s'élargir ou rétrécir par son déplacement dans la direction axiale du vilebrequin afin de modifier ainsi le diamètre effectif de la poulie d'entraînement (6) et le diamètre de contact avec la courroie trapézoïdale ;
la poulie de tension (8) inclut une face mobile (25) pouvant être déplacée dans la direction axiale de l'arbre de transmission (11), une face fixe (26) fixée sur l'arbre de transmission (11) et un ressort (27) poussant la face mobile à se rapprocher de la face fixe (26) ;
la face mobile (25) de la poulie de tension (8) est configurée pour amener une distance entre la gorge de forme trapézoïdale à s'élargir ou rétrécir par son déplacement dans la direction axiale de l'arbre de transmission afin de modifier ainsi un diamètre effectif de la poulie d'entraînement (6) ou un diamètre de contact avec la courroie trapézoïdale, et
dans laquelle le vilebrequin (5) est entraîné en rotation à une grande vitesse, une force centrifuge est générée sur le rouleau de poids (23) par laquelle la face mobile (18) se rapproche de la face fixe (19) de la poulie d'entraînement (6) afin ainsi d'élargir un diamètre effectif de la courroie trapézoïdale entourée autour de la poulie d'entraînement et un diamètre de contact avec celle-ci, et lorsque le vilebrequin est entraîné en rotation à petite vitesse, une force centrifuge exercée sur le rouleau de poids (23) est réduite, par laquelle la face mobile est séparée de la face fixe (19) de la poulie d'entraînement (6), afin ainsi de rétrécir le diamètre effectif de la courroie trapézoïdale enroulée autour de la poulie d'entraînement (6) et le diamètre de contact avec celle-ci, et la face mobile de la poulie de tension (8) se rapproche de la face fixe de celle-ci par le ressort (27), afin ainsi d'élargir le diamètre effectif de la courroie trapézoïdale enroulée autour de la poulie de tension (8) et le diamètre de contact avec celle-ci,
**caractérisée en ce que** le dispositif de détermination d'anormalité (1B) comprend :
un capteur de vitesse de moteur (31) configuré pour détecter une vitesse de rotation du moteur (3) ;
un capteur d'ouverture de papillon des gaz (33) configuré pour détecter un degré d'ouverture d'un papillon des gaz (32) qui ajuste une admission d'air du moteur (3), et
un capteur de pression (38) configuré pour détecter une pression d'admission du moteur (3), et
une section de détermination (35B) configurée pour déterminer si oui ou non la transmission à variation continue de type à courroie est anormale sur la base d'une ampleur d'une modification de la vitesse de rotation du moteur (3) par rapport au degré d'ouverture du papillon des gaz et une ampleur d'une modification de la vitesse de rotation du moteur par rapport à la pression d'admission détectée par le capteur de pression.

6. Transmission à variation continue de type à courroie selon la revendication 5, dans laquelle la section de détermination détermine que la transmission à variation continue de type à courroie est anormale lorsque la vitesse de rotation du moteur est incluse dans une plage de détermination d'anormalité prédéterminée fixée au préalable pour chaque niveau du degré d'ouverture du papillon des gaz, et la vitesse de rotation du moteur est incluse dans une plage de détermination d'anormalité prédéterminée fixée au préalable pour chaque niveau de la pression d'admission, et détermine que la transmission à variation continue de type à courroie est normale dans d'autres cas.

7. Transmission à variation continue de type à courroie présentant un dispositif de détermination d'anormalité (1C), la transmission à variation continue de type à courroie incluant une poulie d'entraînement prévue sur un vilebrequin d'un moteur, une poulie de tension raccordée à un arbre de roue, et une courroie trapézoïdale (9) enroulée autour de la poulie d'entraînement et de la poulie de tension, dans laquelle :
la poulie d'entraînement (6) inclut une face mobile (18) pouvant être déplacée dans une direction axiale du vilebrequin (5), une face fixe (19) fixée sur le vilebrequin (5), et un mécanisme d'entraînement (21) qui amène la face mobile et la face fixe, lesquelles définissent entre elles une gorge trapézoïdale, à se rapprocher et se séparer l'une de l'autre ;
le mécanisme d'entraînement (21) inclut une plaque d'entraînement mobile (22) disposée sur le côté arrière de la face mobile (18) et tournant intégralement avec la face mobile (18) et un rouleau de poids (23) intercalé entre la face mobile (18) et la plaque d'entraînement mobile (22) ;
la face mobile (18) est configurée pour amener une distance entre la gorge de forme trapézoïdale à s'élargir ou rétrécir par son déplacement dans la direction axiale du vilebrequin afin de modifier ainsi le diamètre effectif de la poulie d'entraînement (6) et le diamètre de contact avec la courroie trapézoïdale ;
la poulie de tension (8) inclut une face mobile (25) pouvant être déplacée dans la direction axiale de l'arbre de transmission (11), une face fixe (26) fixée sur l'arbre de transmission (11) et un ressort (27) poussant la face mobile à se rapprocher de la face fixe (26) ;
la face mobile (25) de la poulie de tension (8) est configurée pour amener une distance entre la gorge de forme trapézoïdale à s'élargir ou rétrécir par son déplacement dans la direction axiale de l'arbre de transmission afin de modifier ainsi un diamètre effectif de la poulie d'entraînement (6) ou un diamètre de contact avec la courroie trapézoïdale, et
dans laquelle le vilebrequin (5) est entraîné en rotation à une grande vitesse, une force centrifuge est générée sur le rouleau de poids (23) par laquelle la face mobile (18) se rapproche de la face fixe (19) de la poulie d'entraînement (6) afin ainsi d'élargir un diamètre effectif de la courroie trapézoïdale entourée autour de la poulie d'entraînement et un diamètre de contact avec celle-ci, et lorsque le vilebrequin est entraîné en rotation à petite vitesse, une force centrifuge exercée sur le rouleau de poids (23) est réduite, par laquelle la face mobile est séparée de la face fixe (19) de la poulie d'entraînement (6), afin ainsi de rétrécir le diamètre effectif de la courroie trapézoïdale enroulée autour de la poulie d'entraînement (6) et le diamètre de contact avec celle-ci, et la face mobile de la poulie de tension (8) se rapproche de la face fixe de celle-ci par le ressort (27), afin ainsi d'élargir le diamètre effectif de la courroie trapézoïdale enroulée autour de la poulie de tension (8) et le diamètre de contact avec celle-ci,
**caractérisée en ce que** le dispositif de détermination d'anormalité (1C) comprend :
un capteur de vitesse de moteur (31) configuré pour détecter une vitesse de rotation du moteur (3) ;
un capteur de vitesse d'axe de roue (41) configuré pour détecter une vitesse de rotation de l'arbre de roue (7) ;
une section de calcul de vitesse de véhicule de comparaison (42) configurée pour calculer une vitesse de véhicule sur une vitesse de rotation de moteur prédéterminée comme une référence de comparaison sur la base d'un rapport de la vitesse de rotation du moteur et de la vitesse de rotation de l'arbre de roue (7), et
une section de détermination (35C) configurée pour déterminer si oui ou non la transmission à variation continue de type à courroie est anormale sur la base de la vitesse de véhicule calculée par la section de calcul de vitesse de véhicule de comparaison (42) et une vitesse de véhicule réelle, et pour déterminer qu'une anormalité se produit dans un cas où la vitesse de véhicule réelle est inférieure par rapport à la vitesse de véhicule de la référence de comparaison dans une zone de vitesse de véhicule élevée.

8. Transmission à variation continue de type à courroie selon la revendication 7, dans laquelle la section de détermination détermine que la transmission à variation continue de type à courroie est anormale lorsque la vitesse de véhicule calculée par la section de calcul de vitesse de véhicule de comparaison est incluse dans une plage de détermination d'anormalité prédéterminée fixée au préalable, et détermine que la transmission à variation continue de type à courroie est normale lorsque la vitesse de véhicule calculée par la section de calcul de vitesse de véhicule de comparaison n'est pas incluse dans une plage de détermination d'anormalité.

9. Transmission à variation continue de type à courroie selon l'une quelconque des revendications 1 à 8, comprenant en outre une section d'avertissement qui émet un avertissement lorsqu'il est déterminé en continu que la transmission à variation continue de type à courroie est déterminée comme anormale de manière continue sur une période supérieure à une période de temps de détermination de défaillance prédéterminée fixée au préalable.
